# EUROPEAN PATENT APPLICATION

(11) **EP 2 565 038 A1**
(43) Date of publication of application: **06.03.2013**
(21) Application number: 11775129.7
(22) Date of filing: 28.04.2011
(51) Int. Cl.: B41F 33/14, B41J 2/01, B65H 7/14, B65H 29/60, G01N 21/892

(54) **APPARATUS AND METHOD FOR INSPECTING PRINTED MATERIAL**

(30) Priority: 30.04.2010 JP 2010105264
(71) Applicant: Komori Corporation, Sumida-ku Tokyo 130-0001 (JP)
(72) Inventor: SUZUKI Motoyasu, Tsukuba-shi Ibaraki 300-1268 (JP)
(74) Representative: UEXKÜLL & STOLBERG
(86) International application number: PCT/JP2011/060411
(87) International publication number: WO 2011/136348

(57) **Abstract**

Disclosed is an inspection apparatus which avoids a defective item from being mixed with good items, even when a marking device does not work appropriately and a mark for identifying a good item and a defective item cannot be applied. For this purpose, the apparatus is provided with a quality inspection device (6) for determining whether a print portion (3) of a work to be printed (1) whereon a plurality of print portions (3) are printed is a good item (3a) or a defective item (3b), and an inkjet printer (9) as a marking device for printing a mark (13) on the print portion (3) which is identified as a good item (3a) by the quality inspection device (6).

## Description

### TECHNICAL FIELD

The present invention relates to an apparatus and method for inspecting print portions of a printing product produced by printing the print portions on a print object.

### BACKGROUND ART

In recent years, there has been an increasing demand for quality assurance in the printing industry and inspection on printing products has been conducted in each process by visual check or by using an inspection apparatus. In the printing process as well, it is possible to perform in-line printing quality inspection by installing an inspection apparatus on a printing press. Nevertheless, a method of optimally sorting printing products by determining whether each of the printing products is a good item or a defective item based on an inspection result is yet to be established. In particular, a printing product produced by printing many print portions (such as pattern portions) on a single sheet-like object (a multiple-imposition printing product) requires sorting on a per print portion basis (on a per imposition basis). Here, such a printing process generally applies a flow in which cutting is performed as a separate process, and a sorting method in the printing process is therefore problematic.

An apparatus and a method are disclosed in Japanese Patent No. 3426308 (Patent Document 1) as a solution for such a problem. The apparatus and the method disclosed in this Patent Document 1 are configured to put a reject mark on a print portion being a defective item printed on a sheet and to reject the sheet at a reject station.

### PRIOR ART DOCUMENT

### PATENT DOCUMENT

Patent Document 1: Japanese Patent No. 3426308

### SUMMARY OF THE INVENTION

### PROBLEMS TO BE SOLVED BY THE INVENTION

However, the apparatus and the method described in Patent Document 1 are configured to put a mark on a defective item; accordingly, if a marking device does not function properly, the device cannot put a mark on a defective item and thus the defective item is unidentifiable. As a consequence, the defective item is mixed with good items.

In particular, since a defective item rarely occurs, the marking device is also rarely activated. If ink is clogged in the marking device at the time of the activation, the marking device cannot perform appropriate marking.

In view of the aforementioned circumstance, it is an object of the present invention to avoid a defective item from being mixed with good items even when a marking device does not function properly and thereby fails to put a mark.

### MEANS FOR SOLVING THE PROBLEMS

An apparatus for inspecting a printing product according to the present invention for achieving the above object is characterized in that the apparatus comprises: quality inspecting means for judging whether each of a plurality of print portions printed on each of print objects is acceptable; and marking means for putting a mark on each print portion judged as acceptable by the quality inspecting means.

Further, the apparatus is characterized in that the quality inspecting means comprises: an imaging device configured to acquire an image of each print portion; and a control device configured to subject the image from the imaging device to inspection processing and to transmit an action command to the marking means based on a result of the processing.

Further, the apparatus is characterized by further comprising: a sorting device configured to sort the print objects into a print object on which all the print portions are provided with the mark and a print object including a print portion without the mark; a cutting device configured to cut the print object including the print portion without the mark into the print portions; and an inspection-sorting device configured to sort the cut print portions into the print portion with the mark and the print portion without the mark.

Further, the apparatus is characterized in that the marking means is an inkjet type printing apparatus.

A method for inspecting a printing product according to the present invention for achieving the above object is characterized in that the method comprises: judging whether each of a plurality of printed portions printed on each of print obj ects is acceptable; and putting a mark on each print portion judged as acceptable.

Further, the method is characterized by comprising: judging whether each of a plurality of printed portions printed on each of print objects is acceptable; putting a mark on each print portion judged as acceptable; sorting the print objects into a print object on which all the print portions are provided with the mark and a print object including a print portion without the mark; cutting the print object including the print portion without the mark into the print portions; and sorting the cut print portions into the print portion with the mark and the print portion without the mark.

### EFFECT OF THE INVENTION

According to the apparatus for inspecting a printing product of the present invention, the apparatus is able not only to sort printing products into a good item and a defective item but also to sort out a defective item (a print portion determined as a defective item) even if the apparatus does not function properly and thereby fails to put a mark. Thus, the defective item can be prevented from being mixed with good items.

According to the method for inspecting a printing product of the present invention, the method enables not only to sort printing products into a good item and a defective item but also to sort out a defective item (a print portion determined as a defective item) even in the case of a failure to put a mark on a print portion. Thus, the defective item can be prevented from being mixed with good items.

### BRIEF DESCRIPTION OF THE DRAWINGS

[Fig. 1] Fig. 1 is an explanatory diagram of a paper sheet transfer path to a sorting device, which shows an embodiment of the present invention.
[Fig. 2] Fig. 2 is a plan view of a paper sheet.
[Fig. 3] Fig. 3 is a layout chart of inkjet printers.
[Fig. 4] Fig. 4 is an explanatory diagram of paper sheet transfer paths behind the sorting device.
[Fig. 5] Fig. 5 is an explanatory diagram of paper box development views.
[Fig. 6A] Fig. 6A is a control block diagram of a control device of a quality inspection device.
[Fig. 6B] Fig. 6B is a control block diagram of the control device of the quality inspection device.
[Fig. 6C] Fig. 6C is a control block diagram of the control device of the quality inspection device.
[Fig. 7] Fig. 7 is a control block diagram of a control device of each inkjet printer.
[Fig. 8] Fig. 8 is a control block diagram of a control device of the sorting device.
[Fig. 9A] Fig. 9A is a control block diagram of a control device of an inspection-sorting device.
[Fig. 9B] Fig. 9B is a control block diagram of the control device of the inspection-sorting device.
[Fig. 10A] Fig. 10A is an operation flowchart for the control device of the quality inspection device.
[Fig. 10B] Fig. 10B is an operation flowchart for the control device of the quality inspection device.
[Fig. 10C] Fig. 10C is an operation flowchart for the control device of the quality inspection device.
[Fig. 10D] Fig. 10D is an operation flowchart for the control device of the quality inspection device.
[Fig. 10E] Fig. 10E is an operation flowchart for the control device of the quality inspection device.
[Fig. 10F] Fig. 10F is an operation flowchart for the control device of the quality inspection device.
[Fig. 10G] Fig. 10G is an operation flowchart for the control device of the quality inspection device.
[Fig. 10H] Fig. 10H is an operation flowchart for the control device of the quality inspection device.
[Fig. 11A] Fig. 11A is an operation flowchart for the control device of the quality inspection device.
[Fig. 11B] Fig. 11B is an operation flowchart for the control device of the quality inspection device.
[Fig. 11C] Fig. 11C is an operation flowchart for the control device of the quality inspection device.
[Fig. 12A] Fig. 12A is an operation flowchart for the control device of the quality inspection device.
[Fig. 12B] Fig. 12B is an operation flowchart for the control device of the quality inspection device.
[Fig. 12C] Fig. 12C is an operation flowchart for the control device of the quality inspection device.
[Fig. 12D] Fig. 12D is an operation flowchart for the control device of the quality inspection device.
[Fig. 13] Fig. 13 is an operation flowchart for the control device of each inkjet printer.
[Fig. 14] Fig. 14 is an operation flowchart for the control device of the sorting device.
[Fig. 15A] Fig. 15A is an operation flowchart for the control device of the inspection-sorting device.
[Fig. 15B] Fig. 15B is an operation flowchart for the control device of the inspection-sorting device.
[Fig. 15C] Fig. 15C is an operation flowchart for the control device of the inspection-sorting device.

### MODE FOR CARRYING OUT THE INVENTION

An apparatus and a method for inspecting a printing product according to the present invention will be described below in detail through an embodiment by using the drawings.

### EMBODIMENT

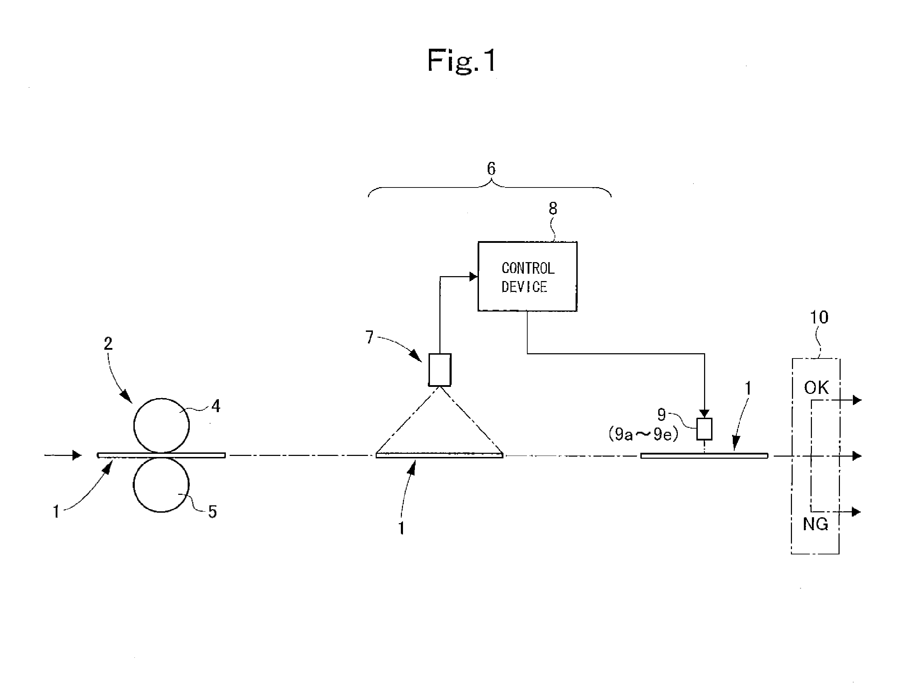

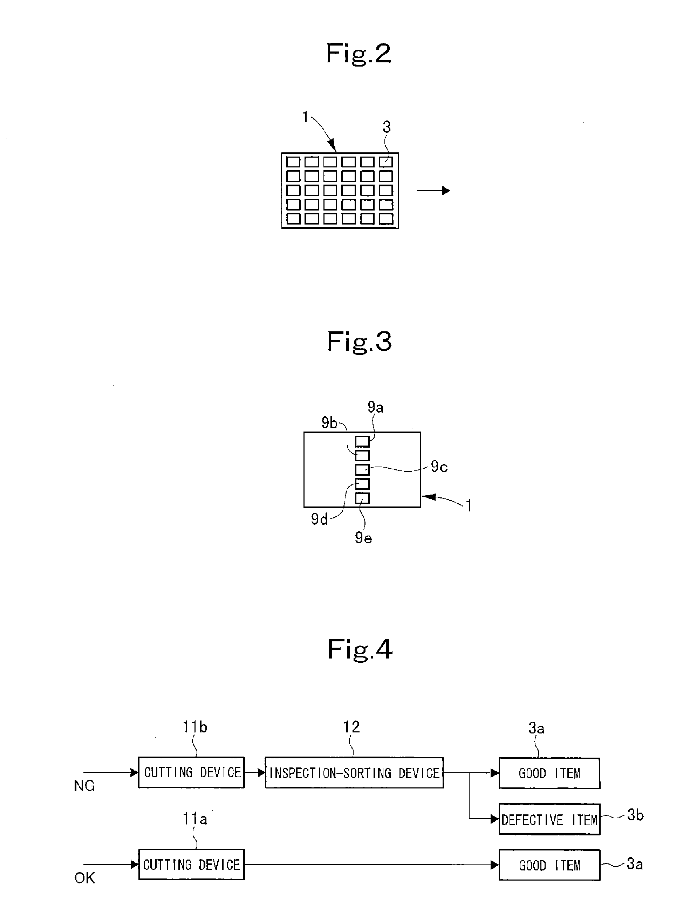

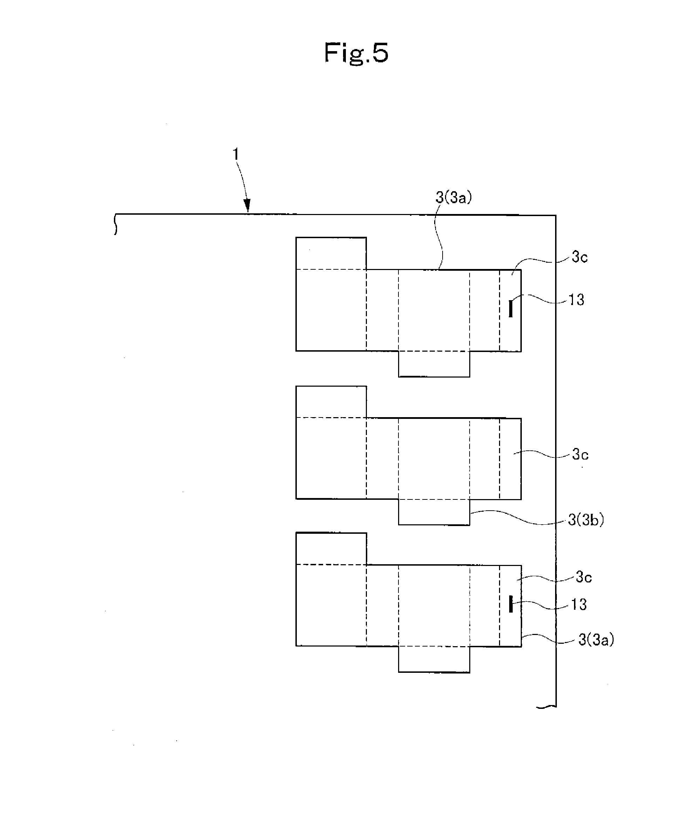

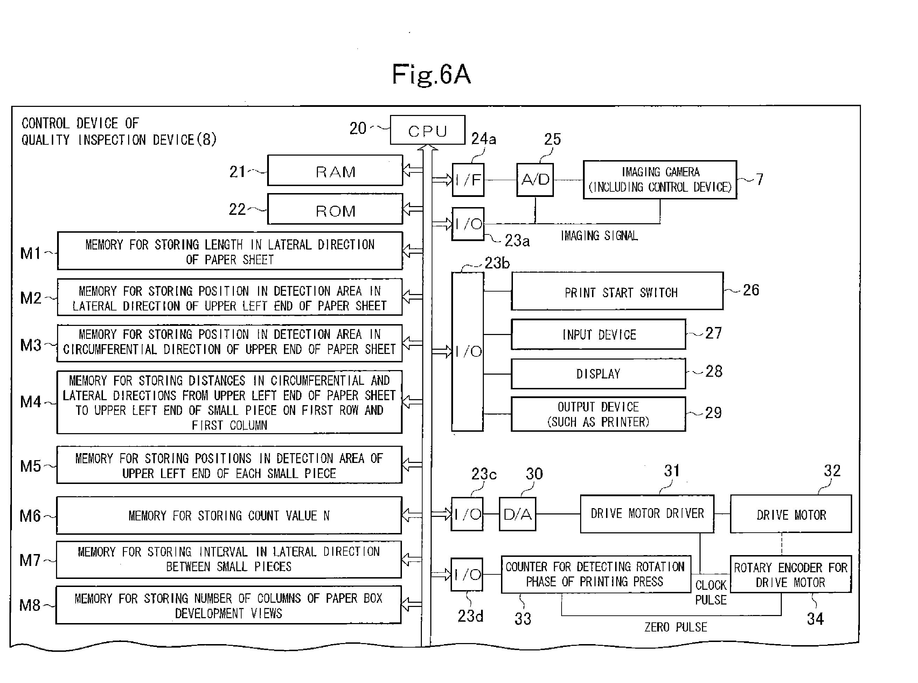

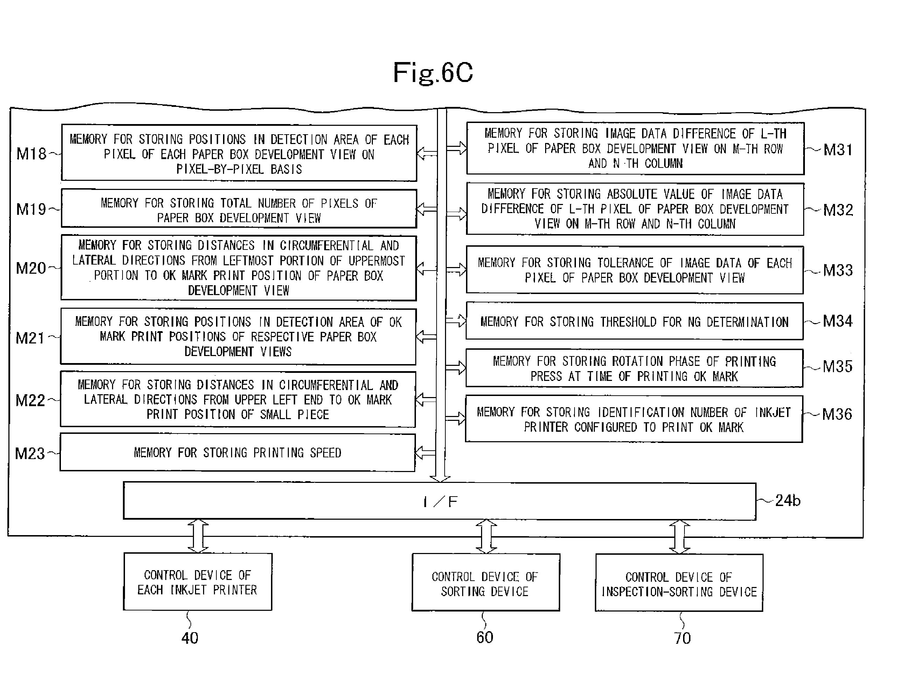

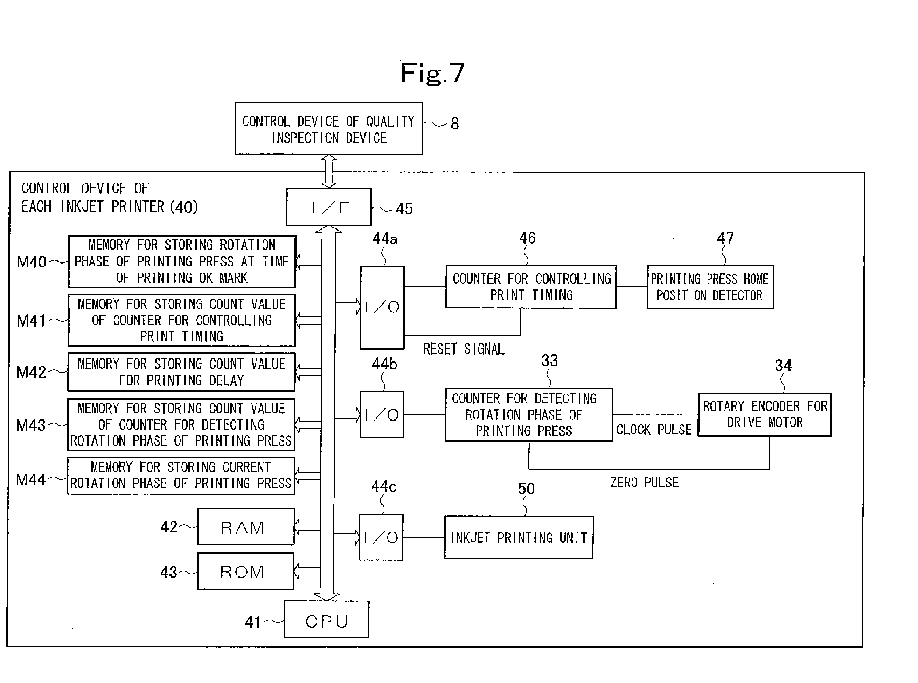

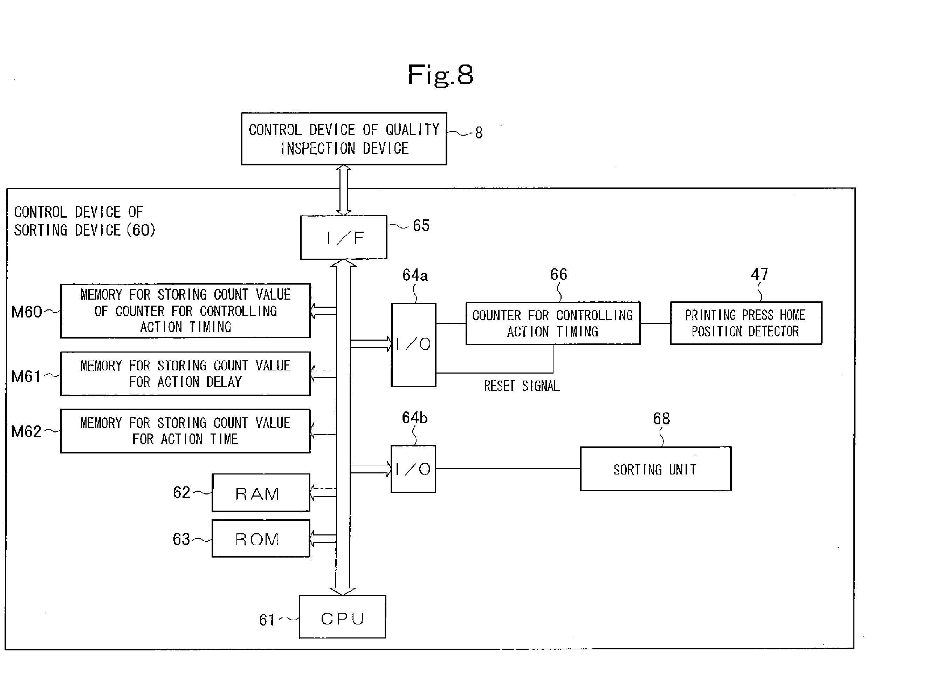

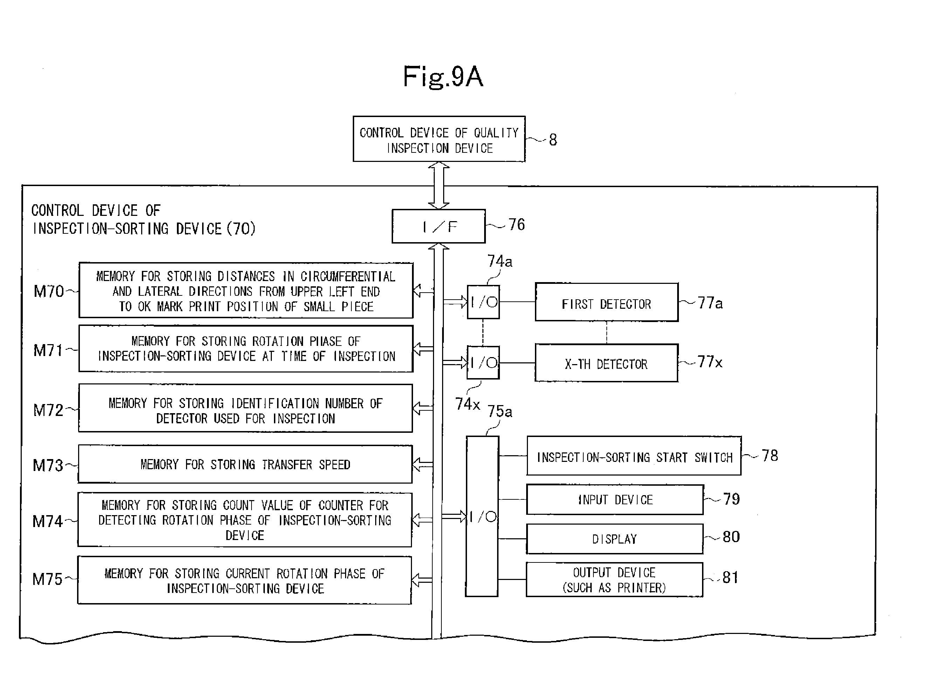

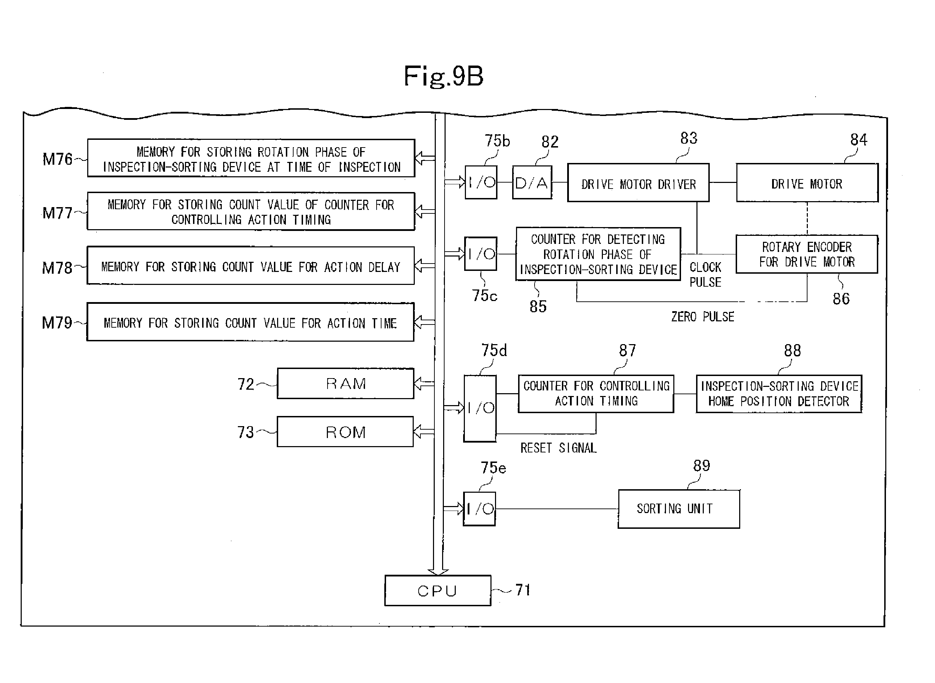

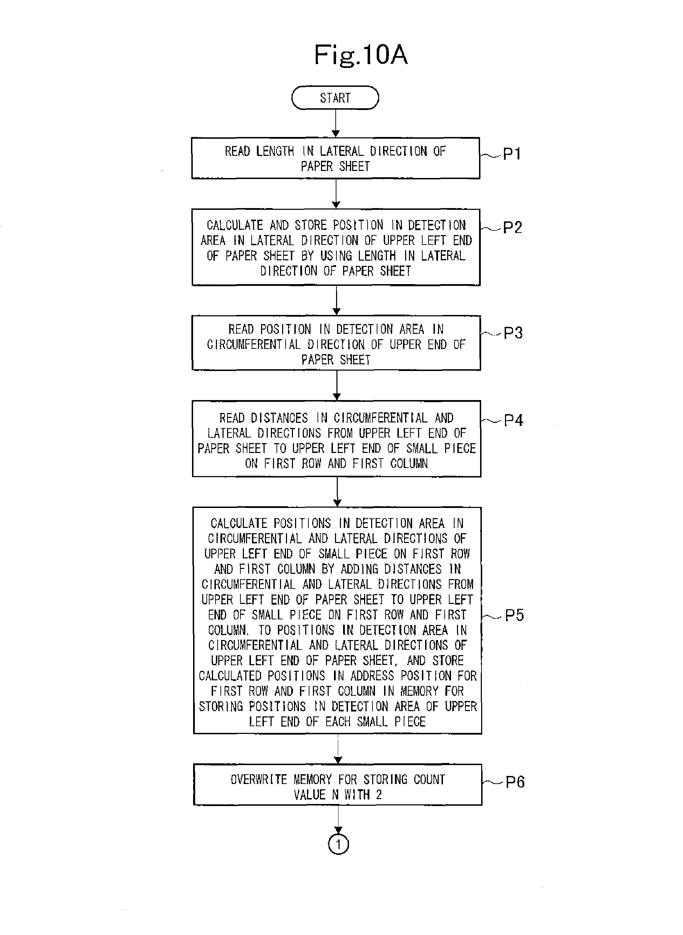

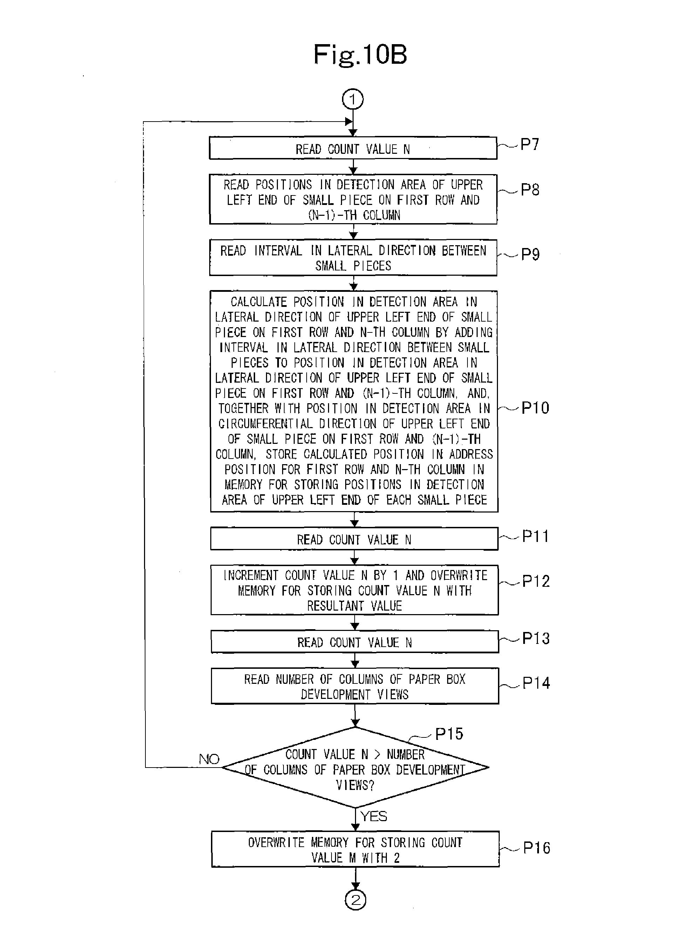

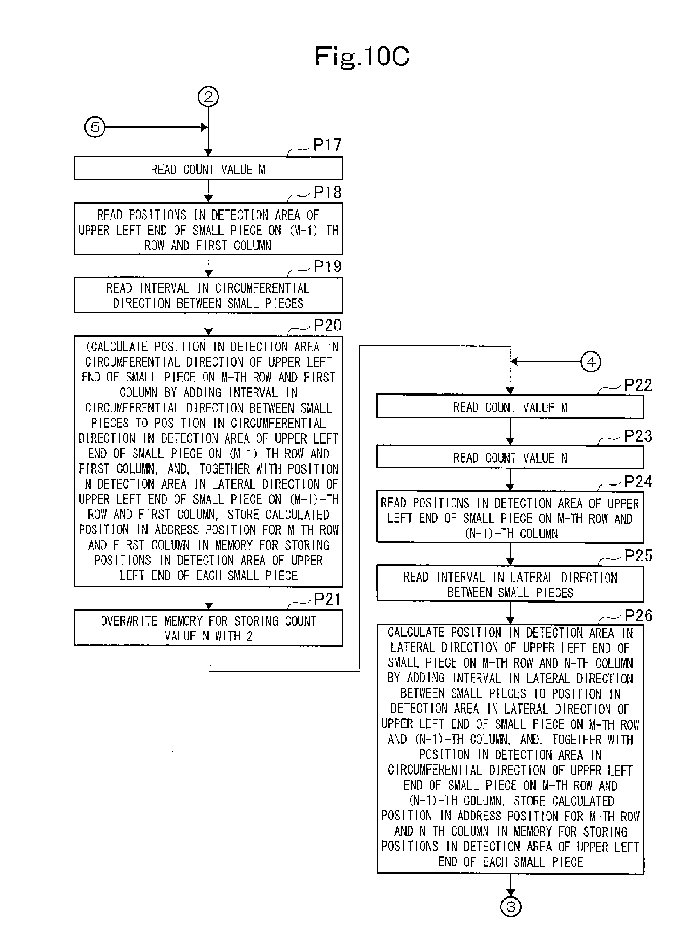

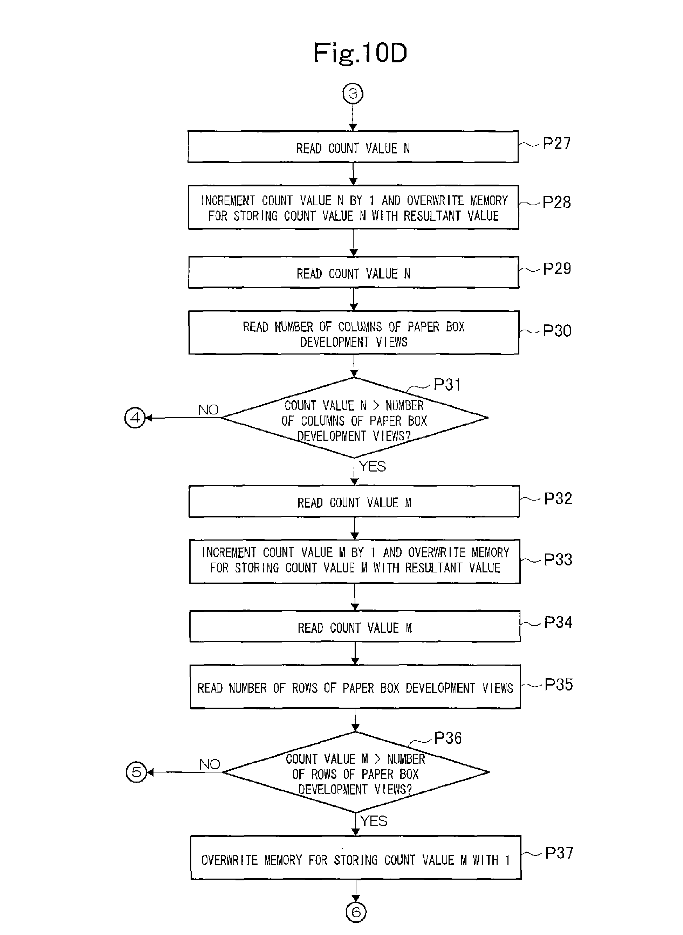

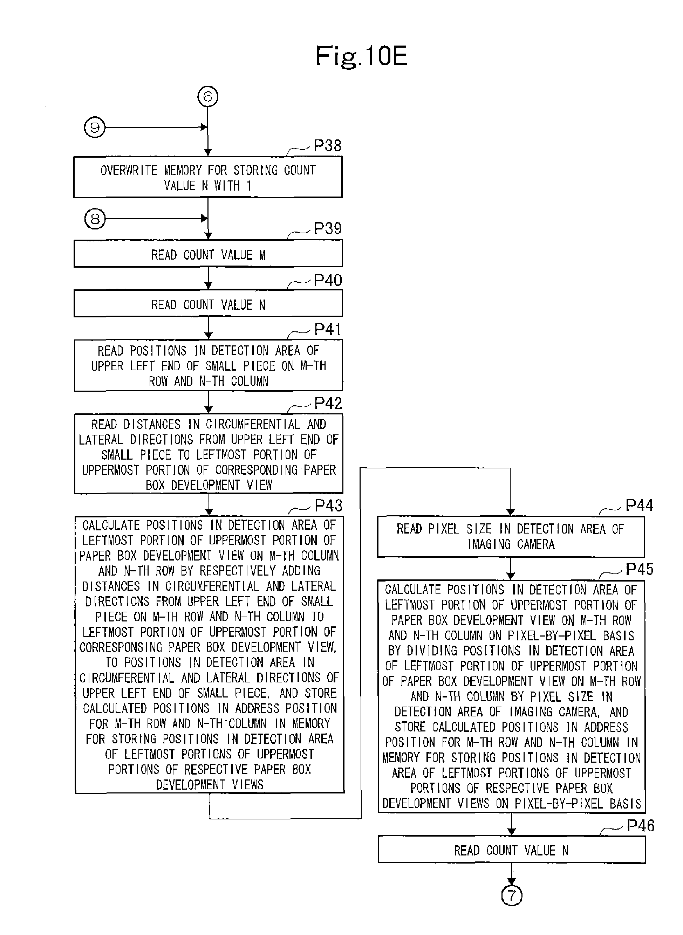

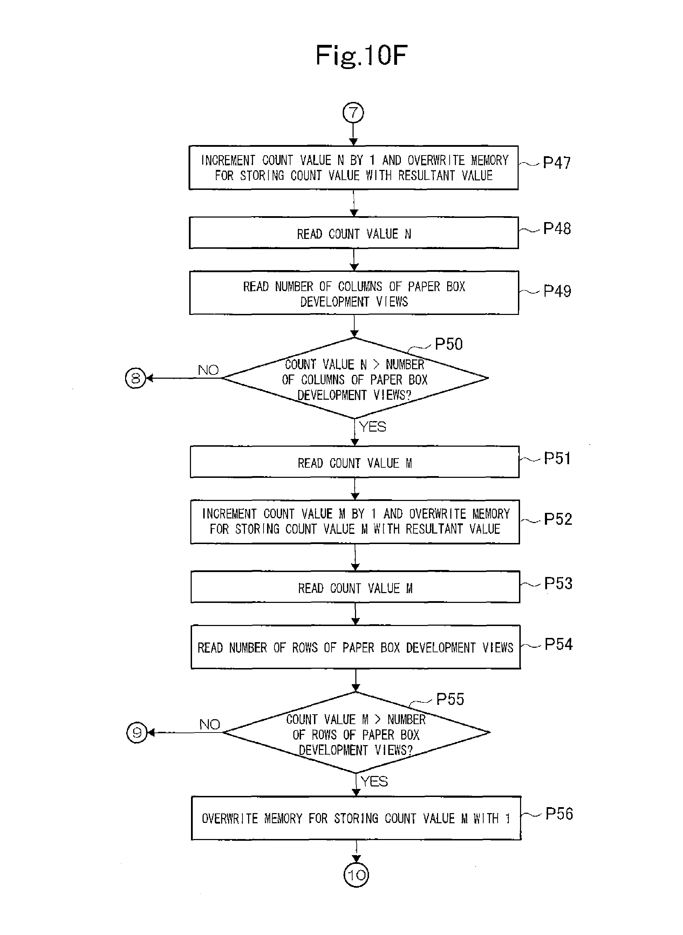

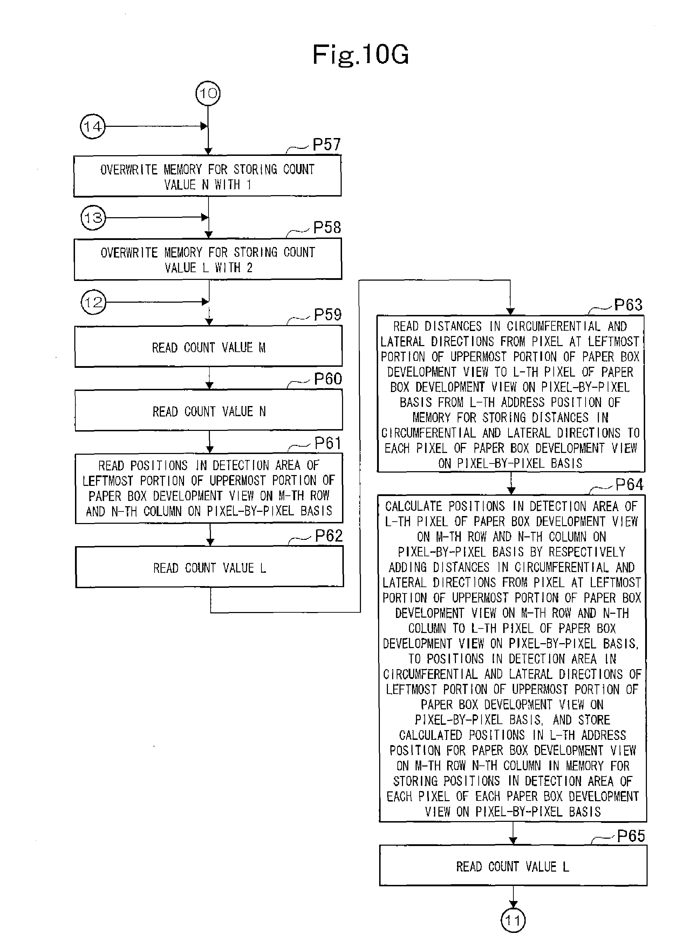

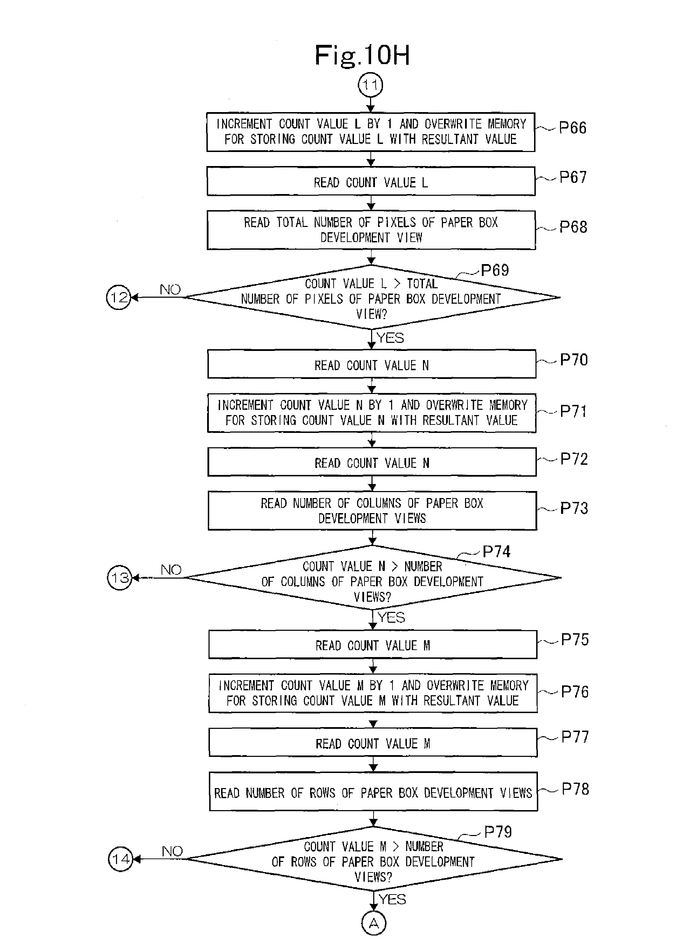

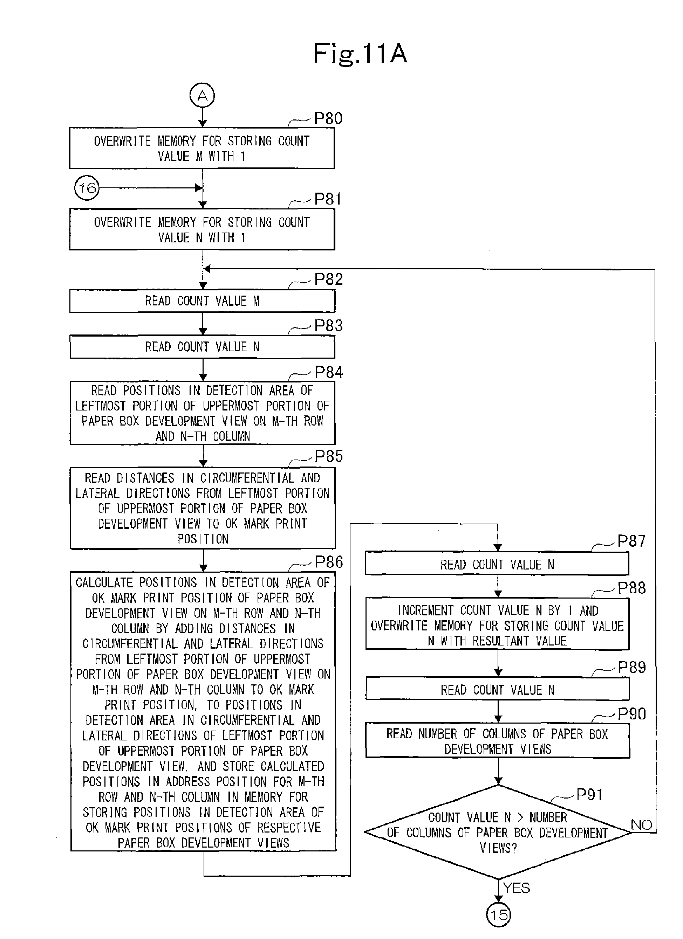

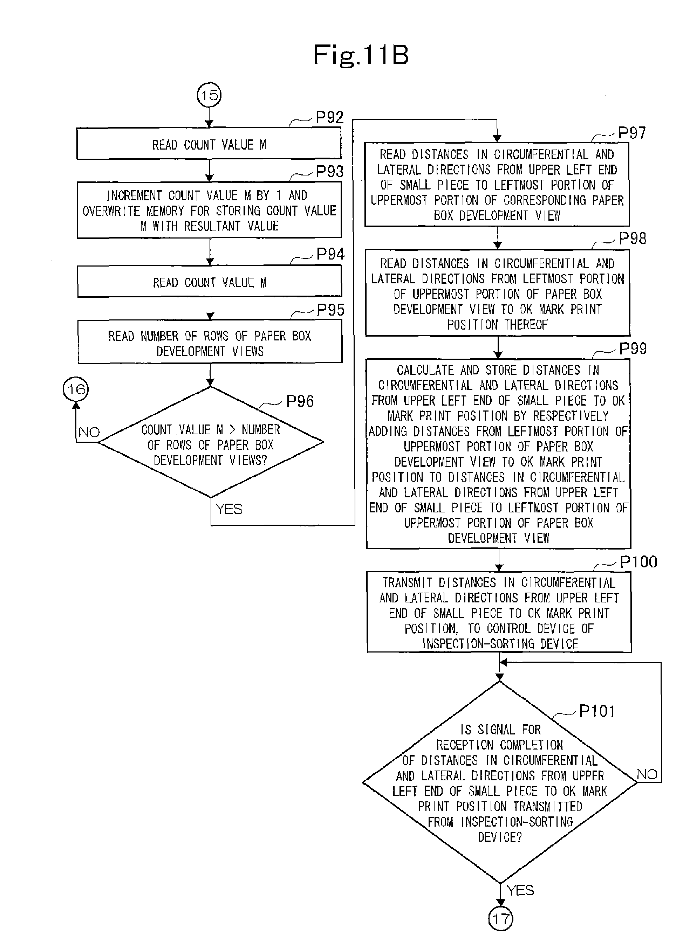

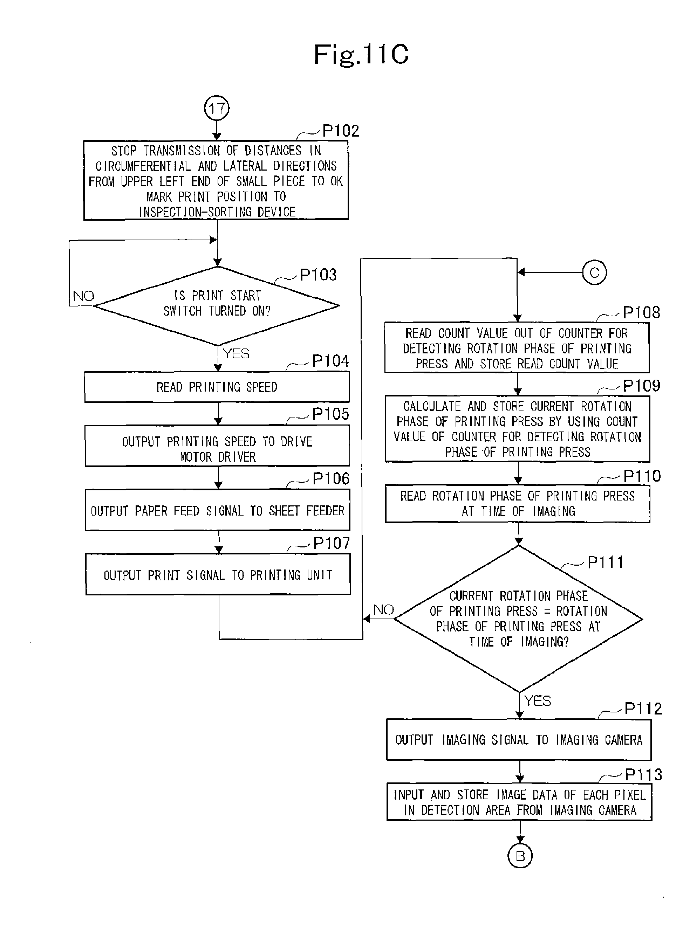

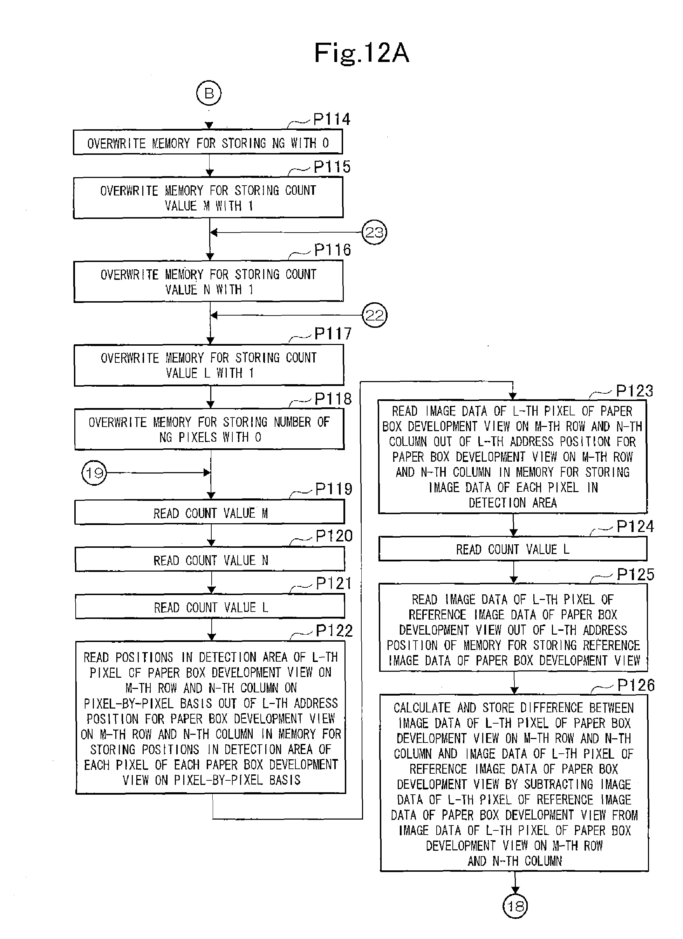

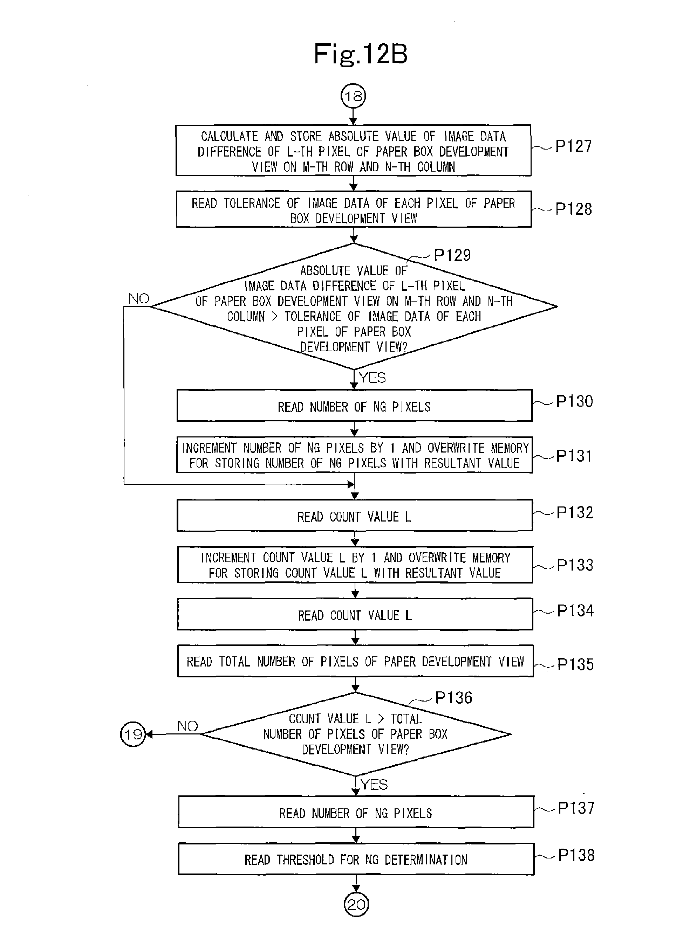

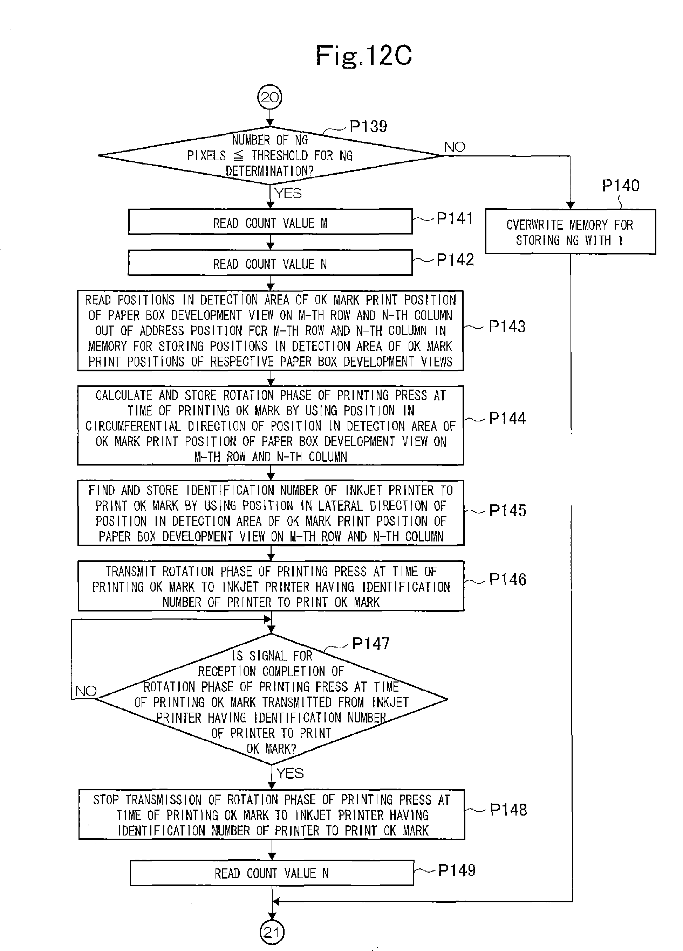

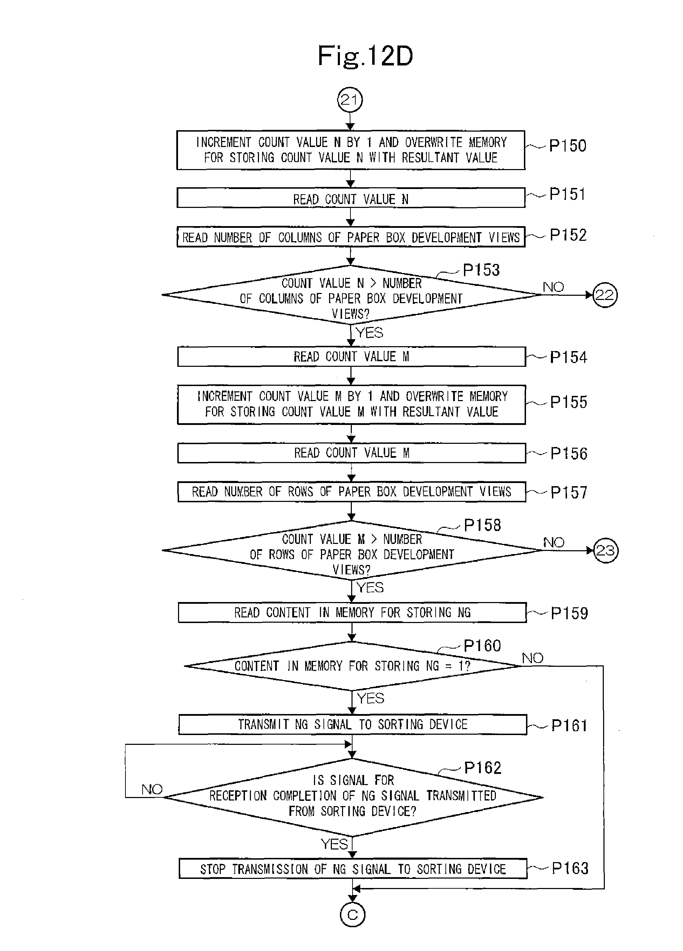

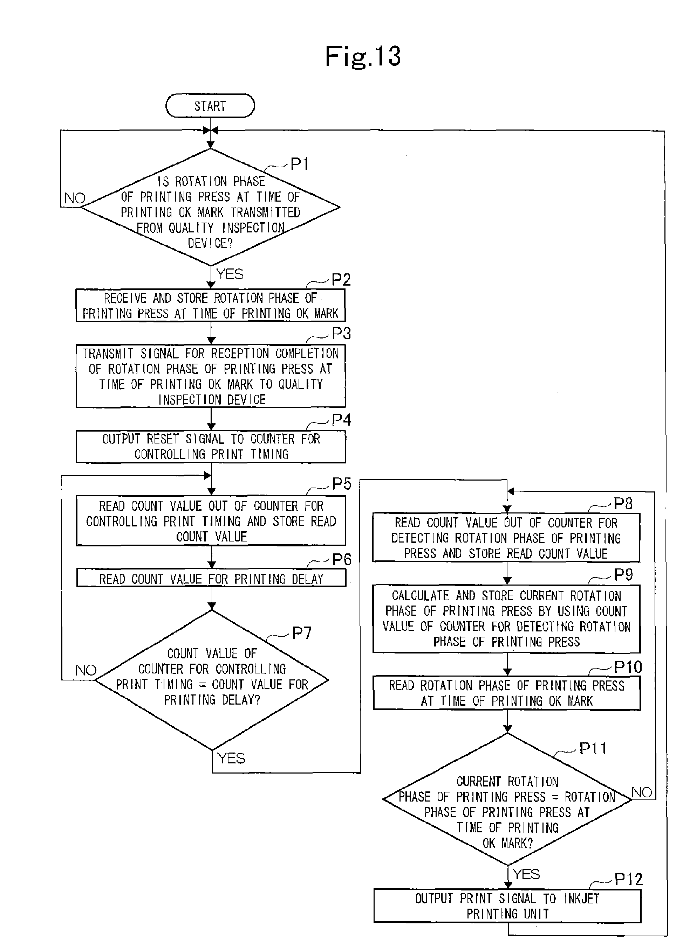

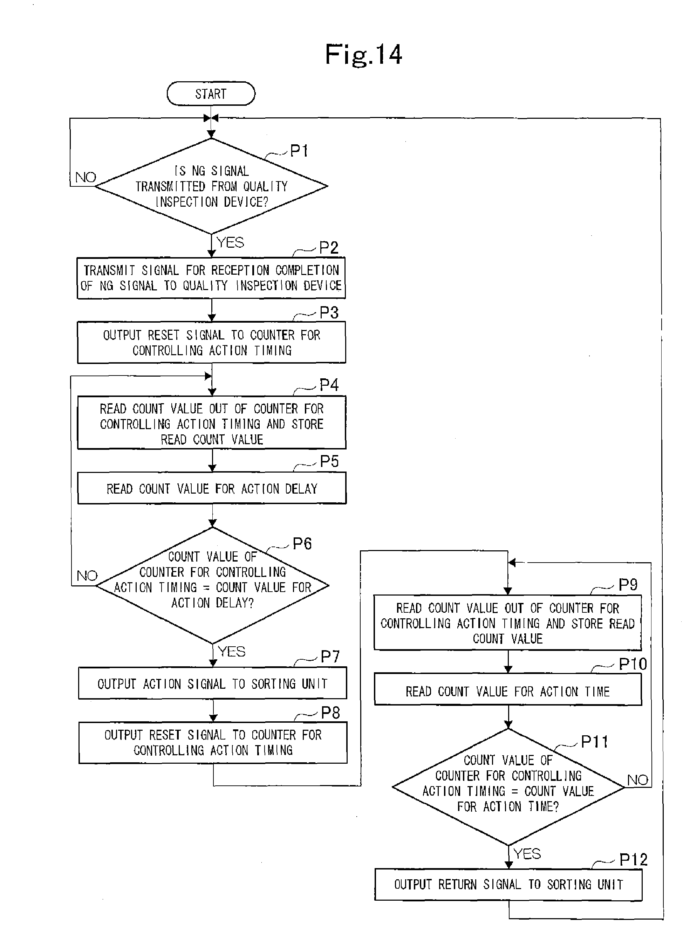

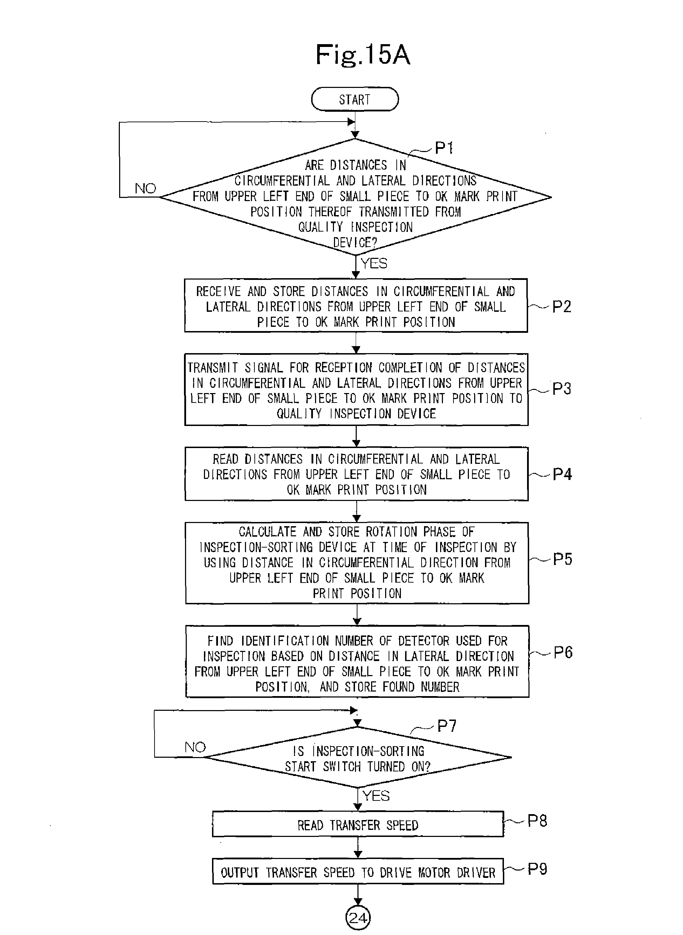

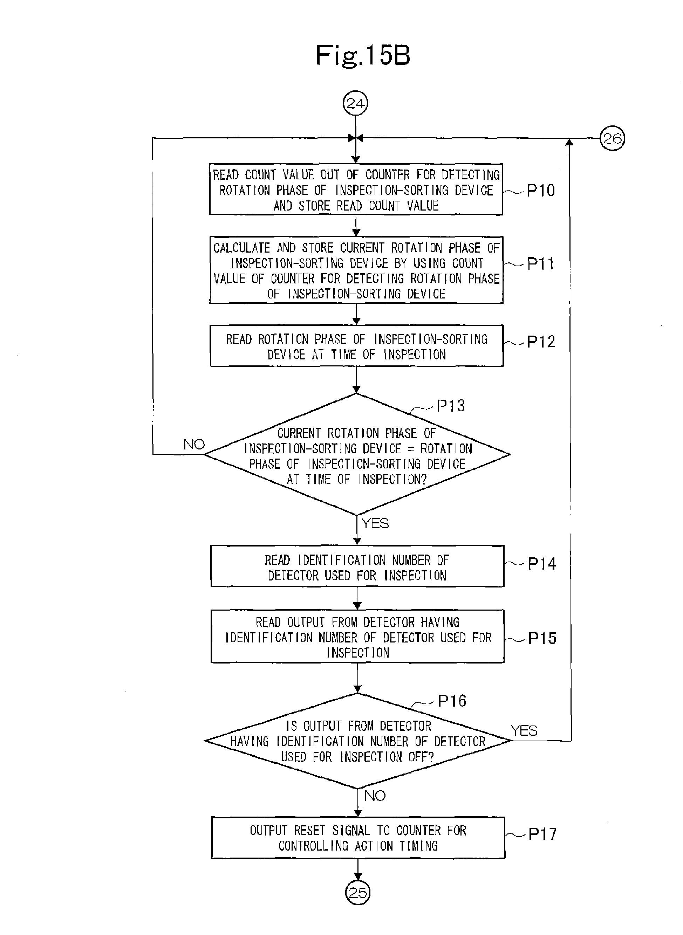

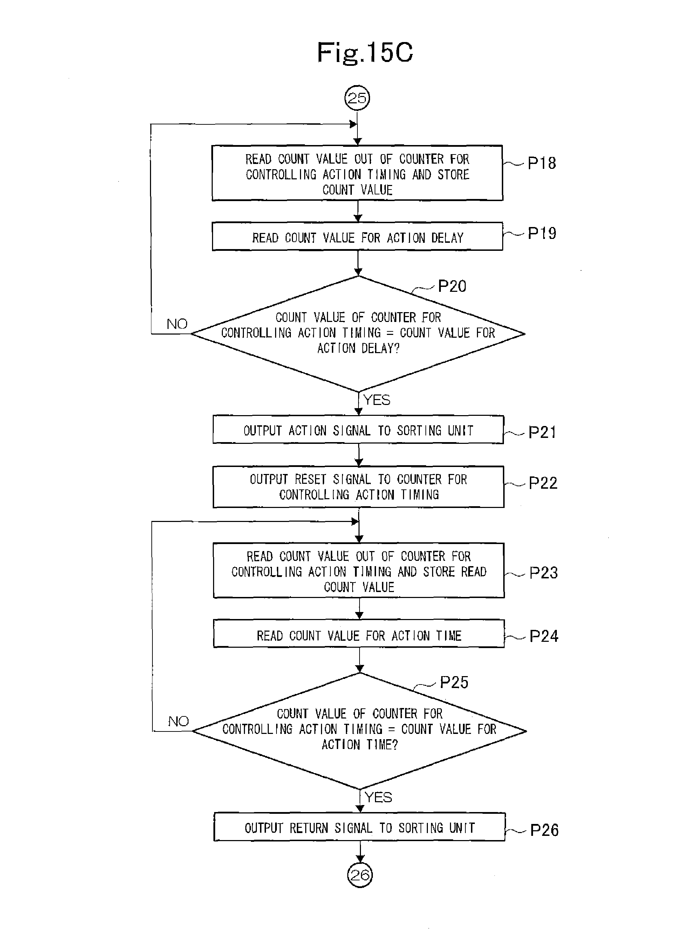

Fig. 1 is an explanatory diagram of a paper sheet transfer path to a sorting device, which shows an embodiment of the present invention. Fig. 2 is a plan view of a paper sheet. Fig. 3 is a layout chart of inkjet printers. Fig. 4 is an explanatory diagram of paper sheet transfer paths behind the sorting device. Fig. 5 is an explanatory diagram of paper box development views. Figs. 6A to 6C are control block diagrams of a control device of a quality inspection device. Fig. 7 is a control block diagram of a control device of each inkjet printer. Fig. 8 is a control block diagram of a control device of the sorting device. Figs. 9A and 9B are control block diagrams of a control device of an inspection-sorting device. Figs. 10A to 10H are operation flowcharts for the control device of the quality inspection device. Figs. 11A to 11C are operation flowcharts for the control device of the quality inspection device. Figs. 12A to 12D are operation flowcharts for the control device of the quality inspection device. Fig. 13 is an operation flowchart for the control device of each inkjet printer. Fig. 14 is an operation flowchart for the control device of the sorting device. Figs. 15A to 15C are operation flowcharts for the control device of the inspection-sorting device.

In this embodiment, the present invention is applied to printing equipment configured to print development views of paper boxes as print portions on a paper sheet being a print object.

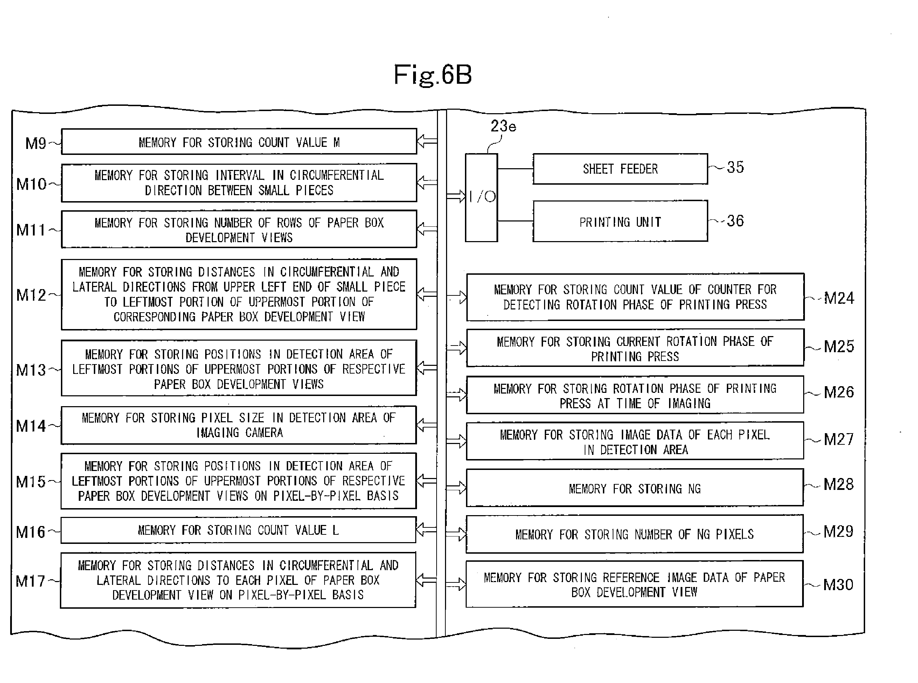

As shown in Fig. 1, many paper box development views 3 (see Fig. 5) being print portions are printed on a paper sheet 1 being a print object by a printing press 2 such as an offset rotary printing press. In this embodiment, as shown in Fig. 2 that is a plan view of the printed paper sheet 1, the paper box development views 3 are printed in five columns in a vertical direction (a direction in line with a traveling direction) and in six rows in a horizontal direction (a direction perpendicular to the traveling direction). In Fig. 1, the printing press 2 is illustrated as a single printing unit 36 (see Fig. 6B) which includes a printing cylinder 4 and an impression cylinder 5. Here, various printing presses may be adopted as the printing press 2 depending on what is printed as the print portion.

A quality inspection device 6, which serves as quality inspecting means for inspecting quality of the printed paper sheet 1, is provided downstream of the printing press 2 in the traveling direction of a paper sheet 1. The quality inspection device 6 inspects whether or not each print portion printed on a paper sheet 1 is acceptable (whether each print portion is a good item or a defective item). The quality inspection device 6 includes an imaging camera (an imaging device) 7 and a control device 8.

Conditions of the paper box development views 3 printed on a paper sheet 1 are detected with the imaging camera 7. For example, an optical or electronic imaging device such as a CCD plane camera, a CCD line camera or a CCD line sensor is adopted as the imaging camera 7. An image captured with the imaging device such as the CCD plane camera, the CCD line camera or the CCD line sensor is used to determine whether the printed conditions of the paper box development views 3 being the print portions are good or bad, i.e., whether the development views are good items or defective items. The imaging camera 7 is not limited only to an optical or electronic device but various other devices are applicable thereto.

In the quality inspection device 6, image information acquired by the imaging camera 7 is transmitted to the control device 8. When the CCD plane camera is adopted as the imaging camera 7, patterns of all the paper box development views 3 printed on a paper sheet 1 are captured and the captured image information is transmitted to the control device 8. The control device 8 is provided with a microprocessor, and is configured to perform inspection processing on the image information (i.e., compares the information with normal pattern information stored in the control device 8 in advance) and to output a command to a device such as a marking device to be described later based on a result of the processing. Note that details of the control device 8 of the quality inspection device will be described later.

Marking devices that serve as marking means are provided downstream of the quality inspection device 6 in the traveling direction of a paper sheet 1. For example, an inkjet printer 9 which is an inkjet type printing apparatus configured to eject ink to perform printing is adopted as each of the marking devices. In this embodiment, as shown in Fig. 3, five inkjet printers 9 (9a, 9b, 9c, 9d, and 9e) are provided above a transfer path for a paper sheet 1 so as to correspond to the columns of the paper box development views 3 to be printed on a paper sheet 1. In other words, a paper sheet 1 is designed to pass below the inkjet printers 9.

An action command based on a result of the inspection processing on the image formation acquired by the imaging camera 7 is transmitted from the control device 8 of the quality inspection device to a control device 40 (see Fig. 7) of each inkjet printer. Specifically, on the basis of the information as to which paper box development views 3 are good items and which paper box development views 3 are defective items out of the thirty (5×6) paper box development views 3 printed on a paper sheet 1, a command to print a mark 13 (see Fig. 5) such as a line, a dot or a design is transmitted to the inkjet printers 9 corresponding to the paper box development views 3 that are the good items. Note that details of the control device 40 of each inkjet printer will be described later.

Moreover, in this embodiment, a sorting device 10 is provided downstream of the inkjet printers 9 in the traveling direction of a paper sheet 1. An action command based on a state of marking on a paper sheet 1 is transmitted from the control device 8 of the quality inspection device to a control device 60 (see Fig. 8) of the sorting device. Specifically, the sorting device 10 sorts paper sheets 1 into a paper sheet 1 on which all the printed paper box development views 3 are good items (OK) and a paper sheet 1 that includes at least one defective item (NG) among the paper box development views 3 printed thereon. Note that details of the control device 60 of the sorting device will be described later. Another conceivable embodiment is that paper sheets 1 having been subjected to marking are sent directly to a cutting device to be described later instead of providing this sorting device 10.

As shown in Fig. 4, two cutting devices 11a and 11b for cutting a paper sheet 1 into paper box development views 3 printed on the sheet (to be more precise, into small pieces that represent minimum cutting units each containing one paper box development view 3) are provided downstream of the sorting device 10 in the traveling direction of a paper sheet 1. As described previously, when the sorting device 10 is provided, the cutting device 11a for paper sheets 1 determined as OK and the cutting device 11b for paper sheets 1 determined as NG are respectively installed as the cutting devices. Here, each of these cutting devices 11a and 11b is activated by manipulation of a switch (or a button) by an operator after the operator sets up a stack of some paper sheets 1.

A paper sheet 1 sorted by the sorting device 10, on which all the printed paper box development views 3 are good items (all the printed paper box development views 3 are paper box development views 3a with the mark 13 printed thereon) , is sent to the cutting device 11a and is cut into the paper box development views 3a. On the other hand, a paper sheet 1 including a defective item (a paper box development view 3b without the mark 13 printed thereon) among the printed paper box development views 3 is sent to the cutting device 11b. The latter paper sheet 1 is cut into the paper box development views 3a and 3b, which are then further sent to an inspection-sorting device 12.

Each of the paper box development views 3a and 3b cut out by the cutting device 11b is subjected to an inspection as to whether the development view is the one with the mark 13 printed thereon (the good item 3a) or the one without the mark 13 printed thereon (the defective item 3b). Thus, the paper box development views 3 are sorted into the ones with the mark 13 printed thereon (the good items 3a) and the ones without the mark 13 printed thereon (the defective items 3b). Then, the ones with the mark 13 printed thereon are processed into products by punching the paper box development views 3a out of the small pieces. The ones without the mark 13 printed thereon are processed as defective products.

If the sorting device 10 is not provided, procedures subsequent to the marking are as follows. Specifically, all paper sheets 1 having passed through the set of the inkjet printers 9 are sent to the cutting device 11b and are cut into the paper box development views 3. All the paper box development views 3 thus cut out are sent to the inspection-sorting device 12. The inspection-sorting device 12 inspects whether each paper development view 3 is the one with the mark 13 printed thereon (the good item 3a) or the one without the mark 13 printed thereon (the defective item 3b). Thus, the paper box development views 3 are sorted into the ones with the mark 13 printed thereon (the good items 3a) and the ones without the mark 13 printed thereon (the defective items 3b). Then, the ones with the mark 13 printed thereon are processed into products by punching the paper box development views 3a out of the small pieces. The ones without the mark 13 printed thereon are processed as defective products.

In addition, the inspection-sorting device 12 is located behind the cutting device 11b for a paper sheet 1 determined as NG. An action command based on the state of marking on a paper sheet 1 is transmitted from the control device 8 of the quality inspection device to a control device 70 (see Figs. 9A and 9B) of the inspection-sorting device. Specifically, the inspection-sorting device 12 inspects whether or not each of the many paper box development views 3 (the small pieces to be more precise) obtained by the cutting operation of the cutting device 11b is provided with the mark 13, and determines and sorts the paper box development views 3 into the ones with the mark 13 (the good items 3a) and the ones without the mark 13 (the defective items 3b). Then, the ones with the mark 13 printed thereon are processed into products by punching the paper box development views 3a out of the small pieces. The ones without the mark 13 printed thereon are processed as defective products. A component using an optical or electronic imaging device such as an optoelectronic switch may be adopted as mark inspecting means in the inspection-sorting device 12, for instance.

As shown in Figs. 6A to 6C, the above-described control device 8 of the quality inspection device includes a CPU 20, a RAM 21, a ROM 22, input-output devices 23a to 23e and interfaces 24a and 24b, all of which are connected to one another through a BUS (bus line).

Moreover, a memory M1 for storing the length in a lateral direction of a paper sheet, a memory M2 for storing the position in a detection area in the lateral direction of the upper left end of a paper sheet, a memory M3 for storing the position in the detection area in a circumferential direction of the upper end of a paper sheet, a memory M4 for storing distances in the circumferential and lateral directions from the upper left end of a paper sheet to the upper left end of a small piece on the first row and the first column, and a memory M5 for storing positions in the detection area of the upper left end of each small piece are connected to the BUS.

In addition, a memory M6 for storing a count value N, a memory M7 for storing an interval in the lateral direction between the small pieces, a memory M8 for storing the number of columns of the paper box development views, a memory M9 for storing a count value M, a memory M10 for storing an interval in the circumferential direction between the small pieces, a memory M11 for storing the number of rows of the paper box development views, a memory M12 for storing distances in the circumferential and lateral directions from the upper left end of a small piece to a leftmost portion of an uppermost portion of the corresponding paper box development view, a memory M13 for storing positions in the detection area of leftmost portions of uppermost portions of the respective paper box development views, a memory M14 for storing a pixel size in the detection area of the imaging camera, and a memory M15 for storing positions in the detection area of the leftmost portions of the uppermost portions of the respective paper box development views on a pixel-by-pixel basis are connected to the BUS.

Furthermore, a memory M16 for storing a count value L, a memory M17 for storing distances in the circumferential and lateral directions to each pixel of a paper box development view on a pixel-by-pixel basis, a memory M18 for storing positions in the detection area of each pixel of each paper box development view on a pixel-by-pixel basis, a memory M19 for storing a total number of pixels of a paper box development view, a memory M20 for storing distances in the circumferential and lateral directions from a leftmost portion of an uppermost portion to an OK mark print position of the paper box development view, a memory M21 for storing positions in the detection area of OK mark print positions of the respective paper box development views, and a memory M22 for storing distances in the circumferential and lateral directions from the upper left end to an OK mark print position of a small piece are connected to the BUS.

In addition, a memory M23 for storing a printing speed, a memory M2 4 for storing a count value of a counter for detecting a rotation phase of the printing press, a memory M25 for storing a current rotation phase of the printing press, a memory M26 for storing a rotation phase of the printing press at the time of imaging, a memory M27 for storing image data of each pixel in the detection area, a memory M28 for storing NG, and a memory M29 for storing the number of NG pixels are connected to the BUS.

Furthermore, a memory M30 for storing reference image data of a paper box development view, a memory M31 for storing an image data difference of an L-th pixel of a paper box development view on an M-th row and an N-th column, a memory M32 for storing an absolute value of the image data difference of the L-th pixel of the paper box development view on the M-th row and the N-th column, a memory M33 for storing a tolerance of image data of each pixel of a paper box development view, a memory M34 for storing a threshold for NG determination, a memory M35 for storing a rotation phase of the printing press at the time of printing an OK mark, and a memory M36 for storing the identification number of an inkjet printer configured to print an OK mark are connected to the BUS.

An A/D converter 25 and the imaging camera (including its control device) 7 are connected to the input-output device 23a.

A print start switch 26, an input device 27 such as a keyboard, various switches and buttons, a display 28 such as a CRT and a lamp, and an output device (such as a Floppy Disk (registered trademark) drive and a printer) 29 are connected to the input-output device 23b.

A drive motor 32 is connected to the input-output device 23c via a D/A converter 30 and a drive motor driver 31.

A rotary encoder 34 for the drive motor annexed to the drive motor 32 is connected to the input-output device 23d via a counter 33 for detecting a rotation phase of the printing press. A clock pulse generated by the rotary encoder 34 for the drive motor is also inputted to the drive motor driver 31. Then, the counter 33 for detecting a rotation phase of the printing press is reset by a zero pulse generated by the rotary encoder 34 for the drive motor.

A sheet feeder 35 and the printing unit 36 are connected to the input-output device 23e.

The imaging camera (including its control device) 7 is connected to the interface 24a via the A/D converter 25.

The control devices 40 of the respective inkjet printers, the control device 60 of the sorting device, and the control device 70 of the inspection-sorting device are connected to the interface 24b.

As shown in Fig. 7, the above-described control device 40 of each inkjet printer includes a CPU 41, a RAM 42, a ROM 43, input-output devices 44a to 44c and an interface 45, all of which are connected to one another through a BUS (bus line).

Moreover, a memory M40 for storing the rotation phase of the printing press at the time of printing an OK mark, a memory M41 for storing a count value of a counter for controlling print timing, a memory M42 for storing a count value for a printing delay, a memory M43 for storing a count value of a counter for detecting the rotation phase of the printing press, and a memory M44 for storing a current rotation phase of the printing press are connected to the BUS.

A printing press home position detector 47 is connected to the input-output device 44a via a counter 46 for controlling print timing. Moreover, the input-output device 44a outputs a reset signal to the counter 46 for controlling print timing. Meanwhile, the printing press home position detector 47 is configured to output one pulse at a predetermined rotation phase each time the printing press makes one revolution. Accordingly, how many revolutions the printing press has made can be checked by counting the pulses thus outputted.

In the same manner as that described above, the above-described rotary encoder 34 for the drive motor is connected to the input-output device 44b via the counter 33 for detecting a rotation phase of the printing press. Then, the counter 33 for detecting a rotation phase of the printing press is reset by the zero pulse generated by the rotary encoder 34 for the drive motor.

An inkjet printing unit 50 is connected to the input-output device 44c.

The control device 8 of the quality inspection device is connected to the interface 45.

As shown in Fig. 8, the above-described control device 60 of the sorting device includes a CPU 61, a RAM 62, a ROM 63, input-output devices 64a and 64b and an interface 65, all of which are connected to one another through a BUS (bus line).

Moreover, a memory M60 for storing a count value of a counter for controlling action timing, a memory M61 for storing a count value for an action delay, and a memory M62 for storing a count value for action time are connected to the BUS.

The above-described printing press home position detector 47 is connected to the input-output device 64a via a counter 66 for controlling action timing. Moreover, the input-output device 64a outputs a reset signal to the counter 66 for controlling action timing.

A sorting unit 68 is connected to the input-output device 64b.

The control device 8 of the quality inspection device is connected to the interface 65.

As shown in Figs. 9A and 9B, the above-described control device 70 of the inspection-sorting device includes a CPU 71, a RAM 72, a ROM 73, input-output devices 74a to 74x and 75a to 75e as well as an interface 76, all of which are connected to one another through a BUS (bus line).

Moreover, a memory M70 for storing distances in the circumferential and lateral directions from the upper left end to an OK mark print position of a small piece, a memory M71 for storing a rotation phase of the inspection-sorting device at the time of inspection, a memory M72 for storing the identification number of a detector used for inspection, a memory M73 for storing a transfer speed, and a memory M74 for storing a count value of a counter for detecting the rotation phase of the inspection-sorting device are connected to the BUS.

In addition, a memory M75 for storing a current rotation phase of the inspection-sorting device, a memory M76 for storing the rotation phase of the inspection-sorting device at the time of inspection, amemory M77 for storing a count value of a counter for controlling action timing, a memory M78 for storing a count value for an action delay, and a memory M79 for storing a count value for action time are connected to the BUS.

First to x-th detectors 77a to 77x are connected to the input-output devices 74a to 74x, respectively.

An inspection-sorting start switch 78, an input device 79 such as a keyboard, various switches and buttons, a display 80 such as a CRT and a lamp, and an output device (such as a Floppy Disk (registered trademark) drive and a printer) 81 are connected to the input-output device 75a.

A drive motor 84 is connected to the input-output device 75b via a D/A converter 82 and a drive motor driver 83.

A rotary encoder 86 for the drive motor annexed to the drive motor 84 is connected to the input-output device 75c via a counter 85 for detecting a rotation phase of the inspection-sorting device. A clock pulse generated by the rotary encoder 86 for the drive motor is also inputted to the drive motor driver 83. Then, the counter 85 for detecting the rotation phase of the inspection-sorting device is reset by a zero pulse generated by the rotary encoder 86 for the drive motor.

An inspection-sorting device home position detector 88 is connected to the input-output device 75d via a counter 87 for controlling action timing. Moreover, the input-output device 75d outputs a reset signal to the counter 87 for controlling action timing. Meanwhile, the inspection-sorting device home position detector 88 is configured to output one pulse at a predetermined rotation phase each time the inspection-sorting device makes one revolution. Accordingly, how many revolutions the inspection-sorting device has made can be checked by counting the pulses thus outputted.

A sorting unit 89 is connected to the input-output device 75e.

The control device 8 of the quality inspection device is connected to the interface 76.

With the above-described configuration, in the inspection of quality of printed paper sheets 1, or namely, in the inspection as to whether a condition of each paper box development view 3 printed as the print portion on each paper sheet 1 is acceptable or not (a good item 3a or a defective item 3b), the control device 8 of the quality inspection device first operates in accordance with operation flows shown in Figs. 10A to 10H, 11A to 11C, and 12A to 12D.

Specifically, in step P1, the length in the lateral direction of a paper sheet is read out of the memory M1. Then, in step P2, a position in the detection area in the lateral direction of the upper left end of the paper sheet is calculated by using the length in the lateral direction of the paper sheet and the calculated value is stored in the memory M2.

Next, in step P3, a position in a detection area in the circumferential direction of the upper end of a paper sheet 1 is read out of the memory M3. Then, in step P4, distances in the circumferential and lateral directions from the upper left end of the paper sheet 1 to the upper left end of the small piece on the first row and the first column are read out of the memory M4.

Next, in step P5, positions in the detection area in the circumferential and lateral directions of the upper left end of the small piece on the first row and the first column are respectively calculated by adding the distances in the circumferential and lateral directions from the upper left end of the paper sheet 1 to the upper left end of the small piece on the first row and the first column, to the positions in the detection area in the circumferential and lateral directions of the upper left end of the paper sheet 1 according to the respective directions, and the calculated positions are stored in an address position for the first row and the first column in the memory M5 for storing positions in the detection area of the upper left end of each small piece. Then, in step P6, the memory M6 for storing a count value N is overwritten with 2.

Next, in step P7, the count value N is read out of the memory M6. Then, in step P8, positions in the detection area of the upper left end of the small piece on the first row and the (N-1)-th column are read out of the memory M5.

Next, in step P9, an interval in the lateral direction between the small pieces is read out of the memory M7. Then, in step P10, a position in the detection area in the lateral direction of the upper left end of the small piece on the first row and the N-th column is calculated by adding the interval in the lateral direction between the small pieces to the position in the detection area in the lateral direction of the upper left end of the small piece on the first row and the (N-1)-th column, and, together with a position in the detection area in the circumferential direction of the upper left end of the small piece on the first row and the (N-1) -th column, the calculated position is stored in an address position for the first row and the N-th column in the memory M5 for storing positions in the detection area of the upper left end of each small piece.

Next, in step P11, the count value N is read out of the memory M6. Then, in step P12, the count value N is incremented by 1 and the memory M6 for storing a count value N is overwritten with the resultant value . Subsequently, in step P13, the count value N is read out of the memory M6. Then, in step P14, the number of columns of the paper box development views 3 is read out of the memory M8.

Next, in step P15, it is judged whether or not a proposition "the count value N > the number of columns of the paper box development views" holds true. If YES, the memory M9 for storing a count value M is overwritten with 2 in step P16. On the other hand, if NO, the processing returns to step P7.

Next, in step P17, the count value M is read out of the memory M9. Then, in step P18, positions in the detection area of the upper left end of the small piece on the (M-1)-th row and the first column are read out of the memory M5.

Next, in step P19, an interval in the circumferential direction between the small pieces is read out of the memory M10. Then, in step P20, a position in the detection area in the circumferential direction of the upper left end of the small piece on the M-th row and the first column is calculated by adding the interval in the circumferential direction between the small pieces to the position in the detection area in the circumferential direction of the upper left end of the small piece on the (M-1)-th row and the first column, and, together with a position in the detection area in the lateral direction of the upper left end of the small piece on the (M-1)-th row and the first column, the calculated position is stored in an address position for the M-th row and the first column in the memory M5 for storing positions in the detection area of the upper left end of each small piece.

Next, in step P21, the memory M6 for storing a count value N is overwritten with 2. Then, in step P22, the count value M is read out of the memory M9. Subsequently, in step P23, the count value N is read out of the memory M6. Then, in step P24, positions in the detection area of the upper left end of the small piece on the M-th row and the (N-1)-th column are read out of the memory M5.

Next, in step P25, the interval in the lateral direction between the small pieces is read out of the memory M7. Then, in step P26, a position in the detection area in the lateral direction of the upper left end of the small piece on the M-th row and the N-th column is calculated by adding the interval in the lateral direction between the small pieces to the position in the detection area in the lateral direction of the upper left end of the small piece on the M-th row and the (N-1) -th column, and, together with a position in the detection area in the circumferential direction of the upper left end of the small piece on the M-th row and the (N-1)-th column, the calculated position is stored in an address position for the M-th row and the N-th column in the memory M5 for storing positions in the detection area of the upper left end of each small piece.

Next, in step P27, the count value N is read out of the memory M6. Then, in step P28, the count value N is incremented by 1 and the memory M6 for storing a count value N is overwritten with the resultant value. Subsequently, in step P29, the count value N is read out of the memory M6. Then, in step P30, the number of columns of the paper box development views 3 is read out of the memory M8.

Next, in step P31, it is judged whether or not the proposition "the count value N > the number of columns of the paper box development views" holds true. If YES, the count value M is read out of the memory M9 in step P32. On the other hand, if NO, the processing returns to step P22.

Next, in step P33, the count value M is incremented by 1 and the memory M9 for storing a count value M is overwritten with the resultant value. Then, in step P34, the count value M is read out of the memory M9.

Next, in step P35, the number of rows of the paper box development views 3 is read out of the memory M11. Then, in step P36, it is judged whether or not a proposition "the count value M > the number of rows of the paper box development views" holds true. If YES, the processing goes to step P37. On the other hand, if NO, the processing returns to step P17.

Next, in step P37, the memory M9 for storing a count value M is overwritten with 1. Then, in step P38, the memory M6 for storing a count value N is overwritten with 1. Subsequently, in step P39, the count value M is read out of the memory M9. Then, in step P40, the count value N is read out of the memory M6.

Next, in step P41, the positions in the detection area of the upper left end of the small piece on the M-th row and the N-th column are read out of the memory M5. Then, in step P42, distances in the circumferential and lateral directions from the upper left end of the small piece to a leftmost portion of an uppermost portion of the corresponding paper box development view 3 are read out of the memory M12.

Next, in step P43, positions in the detection area of the leftmost portion of the uppermost portion of the paper box development view 3 on the M-th row and the N-th column are calculated by adding the distances in the circumferential and lateral directions from the upper left end of the small piece on the M-th row and the N-th column to the leftmost portion of the uppermost portion of the corresponding paper box development view 3, to the positions in the detection area in the circumferential and lateral directions of the upper left end of the small piece according to the respective directions, and the calculated positions are stored in an address position for the M-th row and the N-th column in the memory M13 for storing positions in the detection area of the leftmost portions of the uppermost portions of the respective paper box development views. Then, in step P44, a pixel size in the detection area of the imaging camera 7 is read out of the memory M14.

Next, in step P45, positions in the detection area in the circumferential and lateral directions of the leftmost portion of the uppermost portion of the paper box development view 3 on the M-th row and the N-th column on a pixel-by-pixel basis are respectively calculated by dividing the positions in the detection area in the circumferential and lateral directions of the leftmost portion of the uppermost portion of the paper box development view 3 on the M-th row and the N-th column by the pixel size in the detection area of the imaging camera according to the respective directions, and the calculated positions are stored in an address position for the M-th row and the N-th column in the memory M15 for storing positions in the detection area of the leftmost portions of the uppermost portions of the respective paper box development views on a pixel-by-pixel basis. Then, in step P46, the count value N is read out of the memory M6.

Next, in step P47, the count value N is incremented by 1 and the memory M6 for storing a count value N is overwritten with the resultant value. Then, in step P48, the count value N is read out of the memory M6. Subsequently, in step P49, the number of columns of the paper box development views 3 is read out of the memory M8.

Next, in step P50, it is judged whether or not the proposition "the count value N > the number of columns of the paper box development views" holds true. If YES, the count value M is read out of the memory M9 in step P51. On the other hand, if NO, the processing returns to step P39.

Next, in step P52, the count value M is incremented by 1 and the memory M9 for storing a count value M is overwritten with the resultant value. Then, in step P53, the count value M is read out of the memory M9.

Next, in step P54, the number of rows of the paper box development views 3 is read out of the memory M11. Then, in step P55, it is judged whether or not the proposition "the count value M > the number of rows of the paper box development views" holds true. If YES, the processing goes to step P56. On the other hand, if NO, the processing returns to step P38.

Next, in step P56, the memory M9 for storing a count value M is overwritten with 1. Then, in step P57, the memory M6 for storing a count value N is overwritten with 1.

Next, in step P58, the memory M16 for storing a count value L is overwritten with 2. Then, in step P59, the count value M is read out of the memory M9. Subsequently, in step P60, the count value N is read out of the memory M6. Then, in step P61, the positions in the detection area of the leftmost portion of the uppermost portion of the paper box development view 3 on the M-th row and the N-th column on a pixel-by-pixel basis are read out of the memory M15.

Next, in step P62, the count value L is read out of the memory M26. Then, in step P63, distances in the circumferential and lateral directions from a pixel at the leftmost portion of the uppermost portion of the paper box development view 3 to an L-th pixel of the paper box development view 3 on a pixel-by-pixel basis are read out of the memory M17 from an L-th address position of the memory M17 for storing distances in the circumferential and lateral directions to each pixel of a paper box development view on a pixel-by-pixel basis.

Next, in step P64, positions in the detection area in the circumferential and lateral directions of the L-th pixel of the paper box development view 3 on the M-th row and the N-th column on a pixel-by-pixel basis are respectively calculated by adding the distances in the circumferential and lateral directions from the pixel at the leftmost portion of the uppermost portion of the paper box development view 3 on the M-th row and the N-th column to the L-th pixel of the paper box development view 3 on a pixel-by-pixel basis, to the positions in the detection area in the circumferential and lateral directions of the leftmost portion of the uppermost portion of the paper box development view 3 on a pixel-by-pixel basis according to the respective directions, and the calculated positions are stored in an L-th address position for the paper box development view 3 on the M-th row and the N-th column in the memory M18 for storing positions in the detection area of each pixel of each paper box development view on a pixel-by-pixel basis. Then, in step P65, the count value L is read out of the memory M16.

Next, in step P66, the count value L is incremented by 1 and the memory M16 for storing a count value L is overwritten with the resultant value. Then, in step P67, the count value L is read out of the memory M16.

Next, in step P68, a total number of the pixels of the paper box development view 3 is read out of the memory M19. Then, in step P69, it is judged whether or not a proposition "the count value L > the total number of the pixels of the paper box development view" holds true. If YES, the processing goes to step P70. On the other hand, if NO, the processing returns to step P59.

Next, in step P70, the count value N is read out of the memory M6. Then, in step P71, the count value N is incremented by 1 and the memory M6 for storing a count value N is overwritten with the resultant value.

Next, in step P72, the count value N is read out of the memory M6. Then, in step P73, the number of columns of the paper box development views 3 is read out of the memory M8.

Next, in step P74, it is judged whether or not the proposition "the count value N > the number of columns of the paper box development views" holds true. If YES, the count value M is read out of the memory M9 in step P75. On the other hand, if NO, the processing returns to step P58.

Next, in step P76, the count value M is incremented by 1 and the memory M9 for storing a count value M is overwritten with the resultant value. Then, in step P77, the count value M is read out of the memory M9.

Next, in step P78, the number of rows of the paper box development views 3 is read out of the memory M11. Then, in step P79, it is judged whether or not the proposition "the count value M > the number of rows of the paper box development views" holds true. If YES, the processing goes to step P80. On the other hand, if NO, the processing returns to step P57.

Next, in step P80, the memory M9 for storing a count value M is overwritten with 1. Then, in step P81, the memory M6 for storing a count value N is overwritten with 1. Subsequently, in step P82, the count value M is read out of the memory M9. Then, in step P83, the count value N is read out of the memory M6.

Next, in step P84, the positions in the detection area of the leftmost portion of the uppermost portion of the paper box development view 3 on the M-th row and the N-th column are read out of the memory M13. Then, in step P85, distances in the circumferential and lateral directions from the leftmost portion of the uppermost portion of the paper box development view 3 to an OK mark print position are read out of the memory M20.

Next, in step P86, positions in the detection area in the circumferential and lateral directions of the OK mark print position of the paper box development view 3 on the M-th row and the N-th column are respectively calculated by adding the distances in the circumferential and lateral directions from the leftmost portion of the uppermost portion of the paper box development view 3 on the M-th row and the N-th column to the OK mark print position, to the positions in the detection area in the circumferential and lateral directions of the leftmost portion of the uppermost portion of the paper box development view 3 according to the respective directions, and the calculated positions are stored in an address position for the M-th row and the N-th column in the memory M21 for storing positions in the detection area of OK mark print positions of respective paper box development views. Then, in step P87, the count value N is read out of the memory M6.

Next, in step P88, the count value N is incremented by 1 and the memory M6 for storing a count value N is overwritten with the resultant value. Then, in step P89, the count value N is read out of the memory M6. Subsequently, in step P90, the number of columns of the paper box development views 3 is read out of the memory M8.

Next, in step P91, it is judged whether or not the proposition "the count value N > the number of columns of the paper box development views" holds true. If YES, the count value M is read out of the memory M9 in step P92. On the other hand, if NO, the processing returns to step P82.

Next, in step P93, the count value M is incremented by 1 and the memory M for storing a count value M is overwritten with the resultant value. Then, in step P94, the count value M is read out of the memory M9.

Next, in step P95, the number of rows of the paper box development views 3 is read out of the memory M11. Then, in step P96, it is judged whether or not the proposition "the count value M > the number of rows of the paper box development views" holds true. If YES, the processing goes to step P97. On the other hand, if NO, the processing returns to step P81.

Next, in step P97, the distances in the circumferential and lateral directions from the upper left end of a small piece to the leftmost portion of the uppermost portion of the corresponding paper box development view 3 are read out of the memory M12. Then, in step P98, the distances in the circumferential and lateral directions from the leftmost portion of the uppermost portion of the paper box development view 3 to the OK mark print position thereof are read out of the memory M20.

Next, in step P99, distances in the circumferential and lateral directions from the upper left end of the small piece to the OK mark print position are respectively calculated by adding the distances in the circumferential and lateral directions from the leftmost portion of the uppermost portion of the paper box development view 3 to the OK mark print position to the distances in the circumferential and lateral directions from the upper left end of the small piece to the leftmost portion of the uppermost portion of the paper box development view 3 according to the respective directions, and the calculated distances are stored in the memory M22. Then, in step P100, the distances in the circumferential and lateral directions from the upper left end of the small piece to the OK mark print position are sent to the control device 70 of the inspection-sorting device.

Next, when a signal for reception completion of the distances in the circumferential and lateral directions from the upper left end of the small piece to the OK mark print position is transmitted from the control device 70 of the inspection-sorting device in step P101, the transmission of the distances in the circumferential and lateral directions from the upper left end of the small piece to the OK mark print position to the control device 70 of the inspection-sorting device is stopped in step P102.

Next, when the print start switch 26 is turned on in step P103, the printing speed is read out of the memory M23 in step P104. Subsequently, in step P105, the printing speed is outputted to the drive motor driver 31 via the D/A converter 30. Then, in step P106, a paper feed signal is outputted to the sheet feeder 35.

Next, in step P107, a print signal is outputted to the printing unit 36. Then, in step P108, a count value is read out of the counter 33 for detecting a rotation phase of the printing press and is stored in the memory M24.

Next, in step P109, a current rotation phase of the printing press is calculated by using the count value of the counter 33 for detecting a rotation phase of the printing press and the calculated value is stored in the memory M25. Then, in step P110, a rotation phase of the printing press at the time of imaging is read out of the memory M26.

Next, in step P111, it is judged whether or not a proposition "the current rotation phase of the printing press = the rotation phase of the printing press at the time of imaging" holds true. If YES, an imaging signal is outputted to the imaging camera 7 in step P112. On the other hand, if NO, the processing returns to step P108.

Next, in step P113, image data of each pixel in the detection area is inputted from the imaging camera 7 via the A/D converter 25 and stored in the memory M27. Then, in step P114, the memory M28 for storing NG is overwritten with 0.

Next, in step P115, the memory M9 for storing a count value M is overwritten with 1. Then, in step P116, the memory M6 for storing a count value N is overwritten with 1. Subsequently, in step P117, the memory M16 for storing a count value L is overwritten with 1. Then, in step P118, the memory M29 for storing the number of NG pixels is overwritten with 0.

Next, in step P119, the count value M is read out of the memory M9. Then, in step P120, the count value N is read out of the memory M6. Subsequently, in step P121, the count value L is read out of the memory M16. Then, in step P122, positions in the detection area of the L-th pixel of the paper box development view 3 on the M-th row and the N-th column on a pixel-by-pixel basis are read out of the L-th address position for the paper box development view 3 on the M-th row and the N-th column in the memory M18 for storing positions in the detection area of each pixel of each paper box development view on a pixel-by-pixel basis.

Next, in step P123, image data of the L-th pixel of the paper box development view 3 on the M-th row and the N-th column is read out of an L-th address position for the paper box development view 3 on the M-th row and the N-th column in the memory M27 for storing image data of each pixel in the detection area. Then, in step P124, the count value L is read out of the memory M16.

Next, in step P125, image data of an L-th pixel of reference image data of the paper box development view 3 is read out of an L-th address position of the memory M30 for storing reference image data of the paper box development view. Then, in step P126, a difference between the image data of the L-th pixel of the paper box development view 3 on the M-th row and the N-th column and the image data of the L-th pixel of the reference image data of the paper box development view 3 is calculated by subtracting the image data of the L-th pixel of the reference image data of the paper box development view 3 from the image data of the L-th pixel of the paper box development view 3 on the M-th row and the N-th column, and the calculated difference is stored in the memory M31.

Next, in step P127, an absolute value of the image data difference of the L-th pixel of the paper box development view 3 on the M-th row and the N-th column is calculated and stored in the memory M32. Then, in step P128, a tolerance of the image data of each pixel of the paper box development view 3 is read out of the memory M33.

Next, in step P129, it is judged whether or not a proposition "the absolute value of the image data difference of the L-th pixel of the paper box development view on the M-th row and the N-th column > the tolerance of the image data of each pixel of the paper box development view" holds true. If YES, the number of NG pixels is read out of the memory M29 in step P130. On the other hand, if NO, the processing goes to step P132 to be described later.

Next, in step P131, the number of NG pixels is incremented by 1 and the memory M29 for storing the number of NG pixels is overwritten with the resultant value. Then, in step P132, the count value L is read out of the memory M16. Subsequently, in step P133, the count value L is incremented by 1 and the memory M16 for storing a count value L is overwritten with the resultant value. Then, in step P134, the count value L is read out of the memory M16.

Next, in step P135, the total number of pixels of the paper development view 3 is read out of the memory M19. Then, in step P136, it is judged whether or not the proposition "the count value L > the total number of pixels of the paper box development view" holds true. If YES, the number of NG pixels is read out of the memory M29 in step P137. On the other hand, if NO, the processing returns to step P119.

Next, in step P138, a threshold for NG determination is read out of the memory M34. Then, in step P139, it is judged whether or not a proposition "the number of NG pixels ≤ the threshold for NG determination" holds true. If NO, the memory M28 for storing NG is overwritten with 1 in step P140 and then the processing goes to step P150 to be described later. On the other hand, if YES, the count value M is read out of the memory M9 in step P141.

Next, in step P142, the count value N is read out of the memory M6. Then, in step P143, the positions in the detection area of the OK mark print position of the paper box development view 3 on the M-th row and the N-th column are read out of the address position for the M-th row and the N-th column in the memory M21 for storing positions in the detection area of OK mark print positions of the respective paper box development views.

Next, in step P144, a rotation phase of the printing press at the time of printing an OK mark is calculated by using the position in the circumferential direction of the position in the detection area of the OK mark print position of the paper box development view 3 on the M-th row and the N-th column, and the calculated rotation phase is stored in the memory M35. Then, in step P145, the identification number of the inkjet printer 9 to print an OKmark is found by using the position in the lateral direction of the position in the detection area of the OK mark print position of the paper box development view 3 on the M-th row and the N-th column, and the found number is stored in the memory M36. Here, the positions in the lateral direction of the inkjet printers 9 are preset by an operator.

Next, in step P146, the rotation phase of the printing press at the time of printing an OK mark is transmitted to the inkjet printer 9 having the identification number of the printer to print an OK mark. Thereafter, when a signal for reception completion of the rotation phase of the printing press at the time of printing an OK mark is transmitted from the inkjet printer 9 having the identification number of the printer to print an OK mark in step P147, the transmission of the rotation phase of the printing press at the time of printing an OK mark to the inkjet printer 9 having the identification number of the printer to print an OK mark is stopped in step P148.

Next, in step P149, the count value N is read out of the memory M6. Then, in step P150, the count value N is incremented by 1 and the memory M6 for storing a count value N is overwritten with the resultant value. Subsequently, in step P151, the count value N is read out of the memory M6. Then, in step P152, the number of columns of the paper box development views is read out of the memory M8.

Next, in step P153, it is judged whether or not the proposition "the count value N > the number of columns of the paper box development views" holds true. If YES, the count value M is read out of the memory M9 in step P154. On the other hand, if NO, the processing returns to step P117.

Next, in step P155, the count value M is incremented by 1 and the memory M9 for storing a count value M is overwritten with the resultant value. Then, in step P156, the count value M is read out of the memory M9. Subsequently, in step P157, the number of rows of the paper box development views 3 is read out of the memory M11. Then, in step P158, it is judged whether or not the proposition "the count value M > the number of rows of the paper box development views" holds true. If YES, the content in the memory M28 for storing NG is read out in step P159. On the other hand, if NO, the processing returns to step P116.

Next, in step P160, it is judged whether or not a proposition "the content in the memory for storing NG = 1" holds true. If YES, an NG signal is transmitted to (the control device 60 of) the sorting device 10 in step P161. On the other hand, if NO, the processing returns to the above-described step P108.

Next, when a signal for reception completion of the NG signal is transmitted from (the control device 60 of) the sorting device 10 in step P162, the transmission of the NG signal to (the control device 60 of) the sorting device 10 is stopped in step P163. Then, the processing returns to step P108. Thereafter, the above-described operations iterate.

Note that, in the operation flow described above, the length in the lateral direction of a paper sheet 1, the distances in the circumferential and lateral directions from the upper left end of the paper sheet 1 to the upper left end of the small piece on the first row and the first column, the interval in the lateral direction between small pieces, the number of columns of the paper box development views 3, the interval in the circumferential direction between the small pieces, the number of rows of the paper box development views 3, the distances in the circumferential and lateral directions from the upper left end of the small piece to the leftmost portion of the uppermost portion of the corresponding paper box development view 3, the distances in the circumferential and lateral directions from the pixel at the leftmost portion of the uppermost portion of the paper box development view 3 to the L-th pixel of the paper box development view 3 on a pixel-by-pixel basis, the total number of pixels of the paper box development view 3, the distances in the circumferential and lateral directions from the leftmost portion of the uppermost portion of the paper box development view 3 to the OK mark print position thereof, and the reference image data of the paper box development view 3 are arbitrarily set up and inputted in advance by the operator, and are rewritten according to the paper box development view 3 or the small piece.

Next, the control device 40 of each inkjet printer operates in accordance with an operation flow shown in Fig. 13.

Specifically, when the rotation phase of the printing press at the time of printing an OK mark is transmitted from (the control device 8 of) the quality inspection device 6 in step P1, the rotation phase of the printing press at the time of printing an OK mark is received and stored in the memory M40 in step P2.

Next, in step P3, a signal for reception completion of the rotation phase of the printing press at the time of printing an OKmark is transmitted to (the control device 8 of) the quality inspection device 6. Then, in step P4, a reset signal is outputted to the counter 46 for controlling print timing.

Next, in step P5, the count value is read out of the counter 46 for controlling print timing and is stored in the memory M41. Then, in step P6, a count value for a printing delay is read out of the memory M42.

Next, in step P7, it is judged whether or not a proposition "the count value of the counter for controlling print timing = the count value for a printing delay" holds true. If YES, the count value is read out of the counter 33 for detecting a rotation phase of the printing press and is stored in the memory M43 in step P8. On the other hand, if NO, the processing returns to step P5.

Next, in step P9, the current rotation phase of the printing press is calculated by using the count value of the counter 33 for detecting a rotation phase of the printing press and is stored in the memory M44. Then, in step P10, the rotation phase of the printing press at the time of printing an OK mark is read out of the memory M40.

Next, in step P11, it is judged whether or not a proposition "the current rotation phase of the printing press = the rotation phase of the printing press at the time of printing an OK mark" holds true. If YES, a print signal is outputted to the inkjet printing unit 50 in step P12. On the other hand, if NO, the processing returns to step P8. Thereafter, the above-described operations iterate.

Next, the control device 60 of the sorting device operates in accordance with an operation flow shown in Fig. 14.

Specifically, when the NG signal is transmitted from (the control device 8 of) the quality inspection device 6 in step P1, a signal for reception completion of the NG signal is transmitted to (the control device 8 of) the quality inspection device 6 in step P2.

Next, in step P3, a reset signal is outputted to the counter 66 for controlling action timing. Then, in step P4, the count value is read out of the counter 66 for controlling action timing and is stored in the memory M60.

Next, in step P5, a count value for an action delay is read out of the memory M61. Then, in step P6, it is judged whether or not a proposition "the count value of the counter for controlling action timing = the count value for an action delay" holds true. If YES, an action signal is outputted to the sorting unit 68 in step P7. On the other hand, if NO, the processing returns to step P4.

Next, in step P8, the reset signal is outputted to the counter 66 for controlling action timing. Then, in step P9, the count value is read out of the counter 66 for controlling action timing and is stored in the memory M60.

Next, in step P10, a count value for action time is read out of the memory M62. Then, in step P11, it is judged whether or not a proposition "the count value of the counter for controlling action timing = the count value for action time" holds true. If YES, a return signal is outputted to the sorting unit 68 in step P12 and then the processing returns to step P1. On the other hand, if NO, the processing returns to step P9. Thereafter, the above-described operations iterate.

Next, the control device 70 of the inspection-sorting device operates in accordance with an operation flow shown in Figs. 15A to 15C.

Specifically, when the distances in the circumferential and lateral directions from the upper left end of the small piece to the OK mark print position thereof are transmitted from (the control device 8 of) the quality inspection device 6 in step P1, the distances in the circumferential and lateral directions from the upper left end of the small piece to the OK mark print position are received and stored in the memory M70 in step P2.

Next, in step P3, a signal for reception completion of the distances in the circumferential and lateral directions from the upper left end of the small piece to the OK mark print position is transmitted to (the control device 8 of) the quality inspection device 6. Then, in step P4, the distances in the circumferential and lateral directions from the upper left end of the small piece to the OK mark print position are read out of the memory M70.

Next, in step P5, a rotation phase of the inspection-sorting device 12 at the time of inspection is calculated by using the distance in the circumferential direction from the upper left end of the small piece to the OK mark print position, and the calculate rotation phase is stored in the memory M71. Then, in step P6, an identification number of the detector used for inspection is found based on the distance in the lateral direction from the upper left end of the small piece to the OK mark print position, and the found number is stored in the memory M72.

Next, when the inspection-sorting start switch 78 is turned on in step P7, a transfer speed is read out of the memory M73 in step P8. Subsequently, in step P9, the transfer speed is outputted to the drive motor driver 83 via the D/A converter 82. Then, in step P10, a count value is read out of the counter 85 for detecting a rotation phase of the inspection-sorting device and is stored in the memory M74.

Next, in step P11, a current rotation phase of the inspection-sorting device 12 is calculated by using the count value of the counter 85 for detecting a rotation phase of the inspection-sorting device and is stored in the memory M75. Then, in step P12, the rotation phase of the inspection-sorting device 12 at the time of inspection is read out of the memory M76.

Next, in step P13, it is judged whether or not a proposition "the current rotation phase of the inspection-sorting device = the rotation phase of the inspection-sorting device at the time of inspection" holds true. If YES, the identification number of the detector used for inspection is read out of the memory M72 in step P14. On the other hand, if NO, the processing returns to step P10.

Next, in step P15, an output from the detector having the identification number of the detector used for inspection is read. Then, in step P16, it is judged whether or not a proposition "the output from the detector having the identification number of the detector used for inspection is off" holds true. If YES, the processing returns to step P10. On the other hand, if NO, a reset signal is outputted to the counter 87 for controlling action timing in step P17.

Next, in step P18, the count value is read out of the counter 87 for controlling action timing and is stored in the memory M77. Then, in step P19, a count value for an action delay is read out of the memory M78.

Next, in step P20, it is judged whether or not a proposition "the count value of the counter for controlling action timing = the count value for an action delay" holds true. If YES, an action signal is outputted to the sorting unit 89 in step P21. On the other hand, if NO, the processing returns to step P18.

Next, in step P22, a reset signal is outputted to the counter 87 for controlling action timing. Then, in step P23, the count value is read out of the counter 87 for controlling action timing and is stored in the memory M77.

Next, in step P24, a count value for action time is read out of the memory M79. Then, in step P25, it is judged whether or not a proposition "the count value of the counter for controlling action timing = the count value for action time" holds true. If YES, a return signal is outputted to the sorting unit 89 in step P26 and then the processing returns to step P10. On the other hand, if NO, the processing returns to step P23. Thereafter, the above-described operations iterate.

As described above, according to this embodiment, it is possible to sort paper box development views 3 printed on a paper sheet 1 into good items 3a and defective items 3b. In addition, a paper box development view 3 without the mark 13 printed thereon is judged as a defective item. Accordingly, even if the mark 13 is not printed on a good item 3a due to a failure of the inkjet printer 9, such an item is merely judged as a defective item. Thus, no genuine defective items will be accidentally mixed with good items. Moreover, most of the printed paper box development views 3 are good items and such good items undergo marking. As a consequence, the inkjet printers 9 are operated almost constantly. Such operations will considerably reduce a risk of causing ink clogs. Here, a position where the mark 13 is printed is located at a portion such as a marginal portion 3c of the paper box development view 3a which is not exposed after the paper box development view 3a is folded into a box. Thus, the mark 13 does not adversely affect the quality.

Note that the present invention is not limited only to the above-described embodiment. It goes without saying that various modifications are possible without departing from the scope of the present invention. For example, the above-described embodiment includes the sorting device 10 that is configured to sort paper sheets 1 into a paper sheet 1 on which all the print portions are good items and a paper sheet 1 which includes a defective item. Alternatively, it is also possible to use data (information) acquired by the control device 8 of the quality inspection device 6 instead of actually providing the sorting device 10. Specifically, the control device 8 acquires data on particular paper sheets 1 which contain defective items. Accordingly, the control device 8 can forward only the paper box development views 3 that are cut out of the particular paper sheets 1 to the inspection-sorting device 12. In this way, it is possible to reduce the amount of processing conducted by the inspection-sorting device 12.

Meanwhile, the embodiment shows the example of printing the print portions (the paper box development views 3) on one side of each paper sheet 1. However, the present invention is also applicable to a case of printing on two sides of each paper sheet 1. In the latter case, the imaging means such as a CCD plane camera is provided on each of two sides of the paper sheet 1 along the transfer path of the paper sheet 1. Other structural features are similar to those described in the embodiment because the marks 13 should be printed only in the print portions on one side.

Moreover, although the embodiment shows the case of providing one CCD plane camera as the imaging camera 7, two or more CCD plane cameras may be provided instead.

Although paper sheets 1 are regarded as print objects in the above-described embodiment, the print objects are not limited only to the paper sheets. Cloths, films, and other sheet-like materials may also be used as such objects. In addition, a web may also be used as a print object. In this case, however, such a web needs to be inspected every predetermined length and cut into the predetermined length.

### INDUSTRIAL APPLICABILITY

An apparatus and a method for inspecting a printing product according to the present invention are suitably applied to inspection of continuous or discrete sheet-like objects including various print portions, such as banknotes, postage stamps, and securities.

### EXPLANATION OF REFERENCE NUMERALS

- 1: PAPER SHEET
- 2: PRINTING PRESS
- 3: PAPER BOX DEVELOPMENT VIEW
- 3a: GOOD ITEM AS PAPER BOX DEVELOPMENT VIEW
- 3b: DEFECTIVE ITEM AS PAPER BOX DEVELOPMENT VIEW
- 6: QUALITY INSPECTION DEVICE
- 7: IMAGING CAMERA
- 8: CONTROL DEVICE OF QUALITY INSPECTION DEVICE
- 9, 9a TO 9e: INKJET PRINTER
- 10: SORTING DEVICE
- 11a, 11b: CUTTING DEVICE
- 12: INSPECTION-SORTING DEVICE
- 13: MARK
- 40: CONTROL DEVICE OF EACH INKJET PRINTER
- 60: CONTROL DEVICE OF SORTING DEVICE
- 70: CONTROL DEVICE OF INSPECTION-SORTING DEVICE

## Claims

1. An apparatus for inspecting a printing product **characterized in that** the apparatus comprises:
quality inspecting means for judging whether each of a plurality of print portions printed on each of print objects is acceptable; and
marking means for putting a mark on each print portion judged as acceptable by the quality inspecting means.

2. The apparatus for inspecting a printing product according to claim 1, **characterized in that** the quality inspecting means comprises:
an imaging device configured to acquire an image of each print portion; and
a control device configured to subject the image from the imaging device to inspection processing and to transmit an action command to the marking means based on a result of the processing.

3. The apparatus for inspecting a printing product according to claim 1, **characterized in that** the apparatus further comprises:
a sorting device configured to sort the print objects into a print object on which all the print portions are provided with the mark and a print object including a print portion without the mark;
a cutting device configured to cut the print object including the print portion without the mark into the print portions; and
an inspection-sorting device configured to sort the cut print portions into the print portion with the mark and the print portion without the mark.

4. The apparatus for inspecting a printing product according to claim 1, **characterized in that** the marking means is an inkjet type printing apparatus.

5. A method for inspecting a printing product **characterized in that** the method comprises:
judging whether each of a plurality of printed portions printed on each of print objects is acceptable; and
putting a mark on each print portion judged as acceptable.

6. The method for inspecting a printing product according to claim 5, **characterized in that** the method comprises:
judging whether each of a plurality of printed portions printed on each of print objects is acceptable;
putting a mark on each print portion judged as acceptable;
sorting the print objects into a print object on which all the print portions are provided with the mark and a print object including a print portion without the mark;
cutting the print object including the print portion without the mark into the print portions; and
sorting the cut print portions into the print portion with the mark and the print portion without the mark.
